(19) Europäisches Patentamt
European Patent Office
Office européen des brevets

(11) **EP 2 387 003 A1**

(12) **EUROPEAN PATENT APPLICATION**
published in accordance with Art. 153(4) EPC

(43) Date of publication:
**16.11.2011 Bulletin 2011/46**

(51) Int Cl.:
**G06T 7/60** [(2006.01)]

(21) Application number: **09824808.1**

(22) Date of filing: **05.11.2009**

(86) International application number:
**PCT/JP2009/068877**

(87) International publication number:
**WO 2010/053109 (14.05.2010 Gazette 2010/19)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **10.11.2008 JP 2008288260**
**21.04.2009 JP 2009103116**

(71) Applicant: **NEC Corporation**
**Minato-ku**
**Tokyo 108-8001 (JP)**

(72) Inventor: **AKIYAMA Tatsuo**
**Tokyo 108-8001 (JP)**

(74) Representative: **Glawe, Delfs, Moll**
**Patent- und Rechtsanwälte**
**Postfach 26 01 62**
**80058 München (DE)**

(54) **IMAGE MATCHING DEVICE, IMAGE MATCHING METHOD, AND IMAGE MATCHING PROGRAM**

(57)    Provide is an image matching method which executes a highly accurate matching using arrangement of centers of gravity of connected regions as characteristic points. Firstly, a geometric transformation parameter required for converting one image (first image) to another image (second image) is obtained. Next, the geometric transformation parameter is used to acquire a projection partial region obtained by projecting a partial region of the first image to the second image. In the projection partial region, a characteristic amount is calculated from the second image and compared to the characteristic amount calculated from the first image.

FIG.2

REGISTERING PROCESSING OF
REGISTERED IMAGE z

START

CALCULATE AND STORE REGISTERED IMAGE
CHARACTERISTIC POINT ARRANGEMENT
CALCULATE AND STORE REGISTERED
IMAGE CHARACTERISTIC VECTOR — SR1

CALCULATE AND STORE REGISTERED IMAGE
PARTIAL REGION CHARACTERISTIC AMOUNT — SR2

END

EP 2 387 003 A1

**Description**

TECHNICAL FIELD

The present invention relates to an image matching device, an image matching method, and an image matching program. More specifically, the present invention relates to an image matching device, an image matching method, and an image matching program used for finding (searching) an image which corresponds to an image input for matching (searching) from images registered in advance for being matched (searched).

BACKGROUND ART

Examples of widely-used image matching methods and devices are depicted in Patent Document 1 and Patent Document 2. Patent Document 1 and Patent Document 2 both calculate values which characterize a plurality of characteristic points in an image, specifically, invariants regarding geometric transformations, and perform image matching (searching) by utilizing the values.

For example, according to a document/image registering device and a searching device depicted in Patent Document 1, the searching device is constituted with: a registering device; a reading section which stores documents/ images registered to the registering device, and reads a captured image; a captured image characteristic point extracting section which extracts a plurality of characteristic points showing layout of the image from the read captured image; a captured image characteristic point selecting section which selects n-number of characteristic points closest to a target characteristic point p regarding each of the extracted characteristic points; a vote processing section; and a document ID specifying section which specifies a document image ID corresponding to the captured image based on a vote result voted regarding each of the characteristic points.

The registering device includes: an input section for inputting a document image; an input image characteristic point extracting section which extracts a plurality of characteristic points showing layout of the image from the inputted document image; an input image characteristic point selecting section which selects n-number of characteristic points closest to a target characteristic point p regarding each of the extracted characteristic points; and an input image characteristic point registering section which performs, regarding all the combinations acquired by further selecting m-number (m < n) from the n-number of selected characteristic points, (a) processing for acquiring a characteristic amount regarding d-number of points regarding all the combinations acquired by selecting d-number (d is a value equal to or smaller than m defined in advance) from m-number of target characteristic points, (b) processing for acquiring a hash index by a calculation defined in advance from the acquired characteristic amount, and (c) processing for registering the characteristic amount acquired in (a), a point ID that is the ID regarding the characteristic point p, and a document ID of the document image from which the characteristic point p is extracted to the hash in a related manner by using the acquired index of the hash.

The vote processing section performs, regarding all the combinations acquired by further selecting m-number (m < n) from the n-number of selected characteristic points, (d) processing for acquiring a characteristic amount regarding d-number of points regarding all the combinations acquired by selecting d-number (d is a value equal to or smaller than m defined in advance) from m-number of characteristic points, (e) processing for acquiring a hash index by a calculation defined in advance from the acquired characteristic amount, (f) processing for acquiring each of the characteristic points registered to the hash regarding the document image inputted in advance by using the acquired hash index, and processing for voting on the document ID whose characteristic amount matches with the characteristic amount acquired in (d) as a result of comparison.

The widely-used image matching device having such structures operates as follows. The input image characteristic point extracting section of the registering device extracts the characteristic points from the inputted image, the input image characteristic point selecting section selects the n-number of characteristic points regarding each of the extracted characteristic points, and the input image characteristic point registering section performs the processing of (a) to (c) described above.

Then, the captured image characteristic point extracting section extracts the characteristic points from the captured image, the captured image characteristic point selecting section selects the n-number of characteristic points regarding each of the characteristic points, and the vote processing section performs the processing of (d) to (f). Thereafter, the vote processing section performs processing for voting on the document ID whose characteristic amount matches with the characteristic amount acquired in (d) as a result of comparison, and specifies the document ID of the document image which corresponds to the captured image based on the vote result voted regarding each of the characteristic points.

Further, as another technique of an image matching device, there is Patent Document 3. According to Patent Document 3, this image matching device is a device which identifies a recognition target existing in an input image through comparing and matching the input image containing the recognition target and a model image group containing a target registered in advance. The image matching device includes: an image inputting section which inputs an input image; a model image storage section which registers and stores a model image; a local region cutout section which cuts out a characteristic local region from the inputted image and the model image; a local region relating section which projects image information of the selected local region onto a point set on a characteristic space, searches a local region of an image projected onto the nearest position within the characteristic space for each local region of the other image, and relates the local regions to each other; a geometric transformation parameter estimating section including a geometric transformation parameter calculating section which estimates a geometric transformation parameter between the input image and the model image based on the positional relation of the related local region of the image and the local region of the other image; an image geometric transformation section which performs geometric transformation on the image information of the local region of one of the images, the image information of the entire image, or the positional information of the local region within the image by using the estimated geometric transformation parameter; and an image matching section which performs matching by evaluating the consistency between the local regions by using the geometric-transformed local region.

The image matching device disclosed in Patent Document 3 operates as follows. An image of a facial region is cut out from an image. Characteristic points are found by detecting a window (corner) containing a target according to the edge intensity based on each pixel value, for example, a local region (window) image in the periphery thereof is cut out, dimensional compression transformation is performed by KL expansion, wavelet transformation, Fourier transformation, DCT transformation, or the like, the model window data and the input window data are compared and collated within the characteristic space, and the closest window data within the characteristic space are related to each other. A plurality of combinations are selected from the corresponding window group, and the geometric transformation parameter showing the geometrical difference between the both images is estimated based on the positional information within the images. Correction processing of the input image is executed by the acquired geometric transformation parameter, and relative position vote processing of the corresponding windows is executed. Thereafter, similarity of the image matching is calculated.

These examples are common in respect that the image matching is executed by utilizing the local information acquired from the images.

Patent Document 1: WO/2006/092957
Patent Document 2: WO/2008/066152
Patent Document 3: Japanese Unexamined Patent Publication 2001-92963

DISCLOSURE OF THE INVENTION

PROBLEMS TO BE SOLVED BY THE INVENTION

An issue of the techniques disclosed in Patent Document 1 and Patent Document 2 is that it is not possible to perform highly accurate recognition in a case where the layouts of the characteristic points are similar but the original local region images from which the characteristic points are extracted are not similar. It is because the information other than the characteristic points is not used as a characteristic amount.

An issue of the technique disclosed in Patent Document 3 is that it is not possible to perform highly accurate recognition in cases of projection transformation and affine transformation. It is because the dimensional compression image transformation such as KL transformation calculated from model window data and input window data is calculated individually according to coordinate systems inherent to each image. Thus, in a case where modification such as change in the base of the coordinate systems is generated between two local region images regarding a same target, the results of the dimensional compression transformation calculated in a process of performing the dimensional compression transformation originally supposed to correspond become different. As a result, it is considered that a process for corresponding to the closest windows to each other cannot be performed in a fine manner.

An object of the present invention is to provide an image matching device which can perform matching with a fine accuracy even when there is geometric transformation such as affine transformation generated between two images regarding a same target.

MEANS FOR SOLVING THE PROBLEMS

In order to achieve the foregoing object, the image matching device according to the present invention is an image matching device for matching a first image and a second image, and the image matching device is characterized to include: a partial region calculating module which calculates one partial region or more from an image of the second image; a partial region characteristic amount calculating module which calculates a characteristic amount regarding the partial region; a characteristic amount extracting module which calculates characteristic points of the images from each of the first image and the second image; a characteristic point arrangement calculating module which calculates arrangements of the characteristic points from each of the images; an invariant calculating module which calculates a characteristic amount that is a geometric transformation invariant or a characteristic vector having the geometric transformation invariant as an element from the arrangements of the characteristic points of each of the images; an invariant matching judgment module which judges whether or not the characteristic amount or the characteristic vector calculated from the first image matches with the characteristic amount or the characteristic vector calculated from the second image; a parameter estimating module which estimates a geometric transformation parameter between the first image and the second image; a projection partial region determining module which calculates a partial region on the first image corresponding to a partial region on the second image by utilizing the geometric transformation parameter; a projection image partial region characteristic amount calculating module which calculates a characteristic amount regarding the partial region on the first image corresponding to the partial region of the second image acquired by the projection partial region determining module; and a partial region matching module which judges whether or not the characteristic amount calculated by the projection image partial region characteristic amount calculating module matches with the characteristic amount calculated by the partial region characteristic amount calculating module.

Further, while the present invention is built as an image matching device as hardware, the present invention is not limited only to such case. The present invention may also be built as an image matching method and an image matching program.

EFFECT OF THE INVENTION

The present invention is capable of performing matching with a fine accuracy even when there is a fluctuation that can be written in a geometric transformation such as affine transformation generated between two images regarding a same target. It is because the present invention calculates the characteristic amount by using a characteristic amount that characterizes the arrangement of the characteristic points with the geometric transformation invariant, acquires the geometric transformation parameter with high accuracy by using only the matched characteristic point arrangement, and projects one of the images to the other image by utilizing the parameter to perform matching. In a case where the characteristic point arrangements match with each other, the fluctuation between the original characteristic point arrangements from which the characteristic point arrangements are calculated is considered to be within some kind of geometric transformation fluctuation defined according to the kind of the invariant. Thus, it is considered that the fluctuation in the characteristic point arrangements or at least in the vicinity thereof can be written in a highly accurate manner through calculating the transformation parameter only therefrom for the geometric transformation fluctuation.

BRIEF DESCRIPTION OF THE DRAWINGS

FIG. 1 is a block diagram showing the structure of a first embodiment according to the present invention;
FIG. 2 is a flowchart showing an operation of registering processing out of operations of the first embodiment;
FIG. 3 is a flowchart showing an operation of step SR1 of the operations of the first embodiment;
FIG. 4 is a flowchart showing an operation of step SR101 of the operations of the first embodiment;
FIG. 5 is a flowchart showing an operation of step SR102 of the operations of the first embodiment;
FIG. 6 is a flowchart showing an operation of step SR103 of the operations of the first embodiment;
FIG. 7 is a flowchart showing an operation of step SR2 of the operations of the first embodiment;
FIG. 8 is a flowchart showing an operation of step SR21 of the operations of the first embodiment;
FIG. 9 is a flowchart showing an operation of step SR22 of the operations of the first embodiment;
FIG. 10 is a flowchart showing an operation of search processing out of the operations of the first embodiment;
FIG. 11 is a flowchart showing an operation of step SQ1 of the operations of the first embodiment;
FIG. 12 is a flowchart showing an operation of step SQ12 of the operations of the first embodiment;
FIG. 13 is a flowchart showing an operation of step SQ2 of the operations of the first embodiment;
FIG. 14 is a flowchart showing an operation of step SQ22 of the operations of the first embodiment;
FIG. 15 is a flowchart showing an operation of step SQ2207 of the operations of the first embodiment;
FIG. 16 is a flowchart showing an operation of step SQ3 of the operations of the first embodiment;
FIG. 17 is a flowchart showing an operation of step SQ4 of the operations of the first embodiment;
FIG. 18 is a flowchart showing an operation of step SQ6 of the operations of the first embodiment;
FIG. 19 is an illustration showing an example of a related technique where the way of appearing the characteristic points is different in order to describe the effects of the first embodiment;
FIG. 20 is an illustration showing that a partial region of a registered image is projected onto a search image according to the first embodiment in order to describe the effects of the first embodiment;

FIG. 21 is a flowchart showing an operation of search processing out of operations of a second embodiment;

FIG. 22 is a flowchart showing an operation of step SQ7 of the operations of the second embodiment;

FIG. 23 is a block diagram showing the structure of a third embodiment;

FIG. 24 is a flowchart showing an operation of search processing out of operations of the third embodiment;

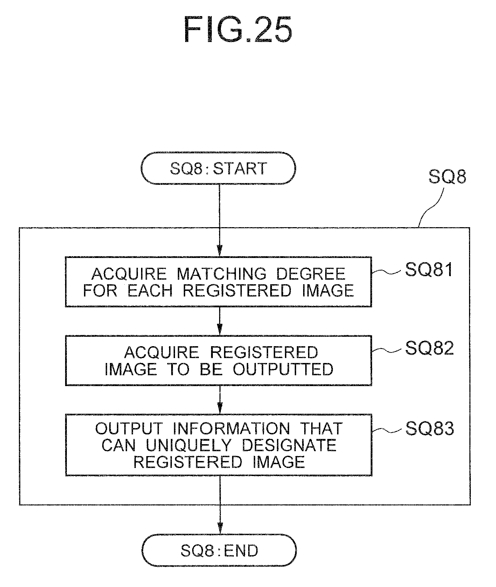

FIG. 25 is a flowchart showing an operation of step SQ8 of the operations of the third embodiment;

FIG. 26 is an illustration showing an example where partial regions of two registered images are projected onto a same search image in order to describe the effects of the third embodiment;

FIG. 27 is a block diagram showing an example where the image matching device according to the first embodiment is built by a personal computer;

FIG. 28 is a flowchart showing an operation of step SQA3 of operations of a first modification example of the second embodiment;

FIG. 29 is a flowchart showing an operation of step SQA4 of the operations of the first modification example of the second embodiment;

FIG. 30 is a block diagram showing the structure of a second modification example of the second embodiment;

FIG. 31 is a flowchart showing an operation of step SQB2 of operations of the second modification example of the second embodiment;

FIG. 32 is a flowchart showing an operation of step SQB22 of the operations of the second modification example of the second embodiment;

FIG. 33 is a flowchart showing an operation of step SQB3 of the operations of the second modification example of the second embodiment;

FIG. 34 is a flowchart showing an operation of step SQB315 of the operations of the second modification example of the second embodiment;

FIG. 35 is a flowchart showing an operation of step SQB4 of the operations of the second modification example of the second embodiment; and

FIG. 36 is a flowchart showing an operation of step SQB415 of the operations of the second modification example of the second embodiment.

BEST MODES FOR CARRYING OUT THE INVENTION

Hereinafter, embodiments of the present invention will be described in details by referring to the drawings.

(FIRST EMBODIMENT)

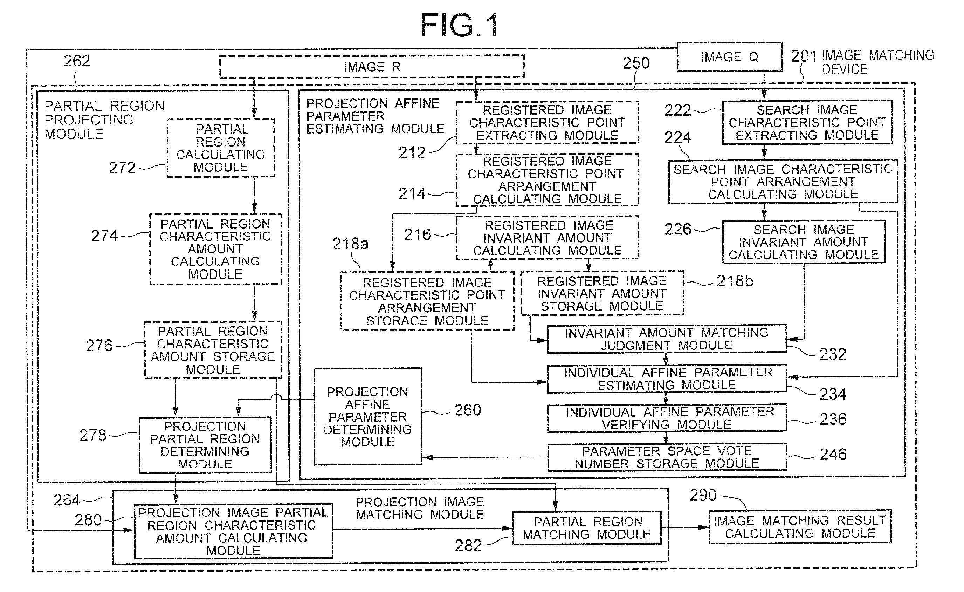

An image matching device according to a first embodiment of the present invention shown in FIG. 1 includes a projection parameter estimating module 250, a partial region projecting module 262, and a projection image matching module 264.

Hereinafter, as an example of geometric transformation, two-dimensional affine transformation (it is to be noted that "affine transformation" hereinafter indicates two-dimensional affine transformation unless there is any specific notice) is assumed. It is based on a supposition that the fluctuation between a first image and a second image can be written accurately or similarly by the affine transformation.

Further, as examples of "geometric transformation invariant", there are affine invariant, projection transformation invariant, similarity transformation invariant, and the like. Furthermore, as examples of "geometric transformation parameter", there are affine parameter, and the like. A parameter which relates a coordinate on a plane and a coordinate on another plane within a three-dimensional space is also a kind of the geometric transformation parameter.

Hereinafter, explanations are provided assuming that the affine invariant is used as an example of the "geometric transformation invariant" and the affine parameter is used as an example of the "geometric transformation parameter".

(Hardware Structure of Image Matching Device)

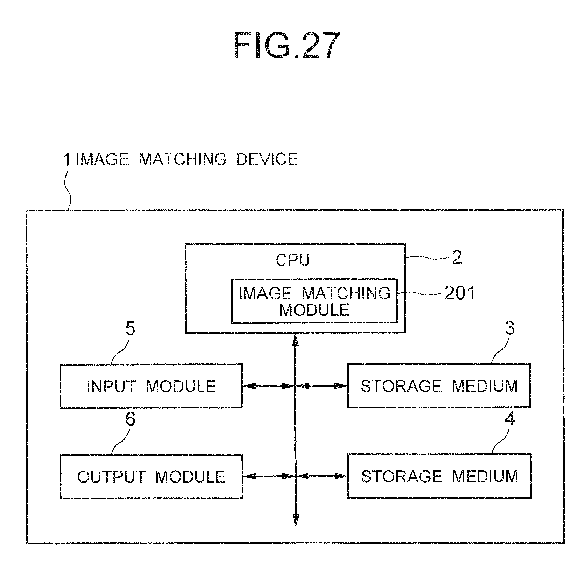

First, a specific structure of the image matching device of the embodiment will be described from a hardware structure as a presupposition, and detailed structures of each module will be described thereafter. FIG. 27 is a block diagram showing an example of a case where the image matching device according to the first embodiment of the present invention is formed by a personal computer.

Referring to FIG. 27, the image matching device 1 according to the first embodiment is configured with a CPU 2 as a part of or an example of a control module as a control device, a storage medium 3, a storage medium 4, an input module 5, and an output module 6.

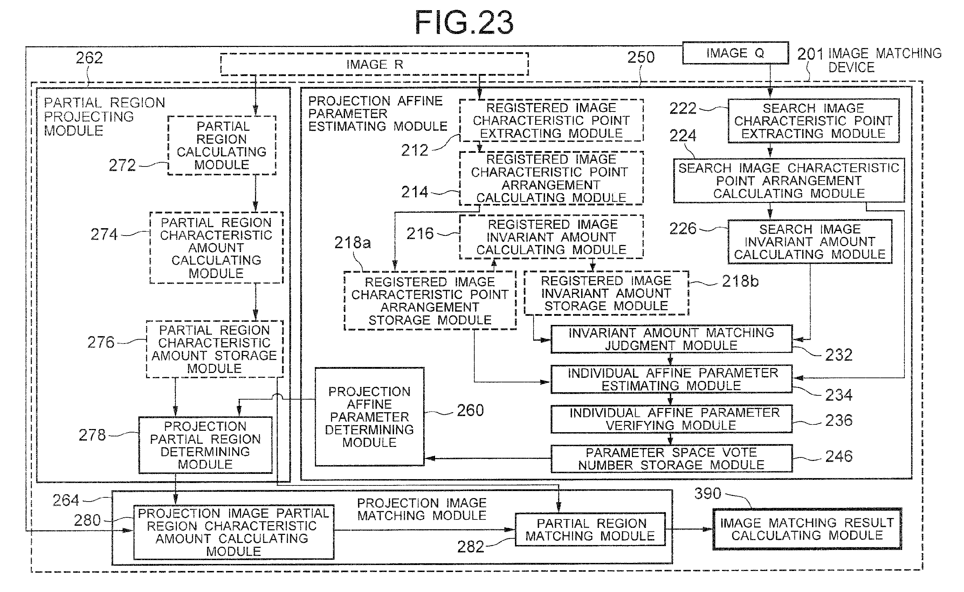

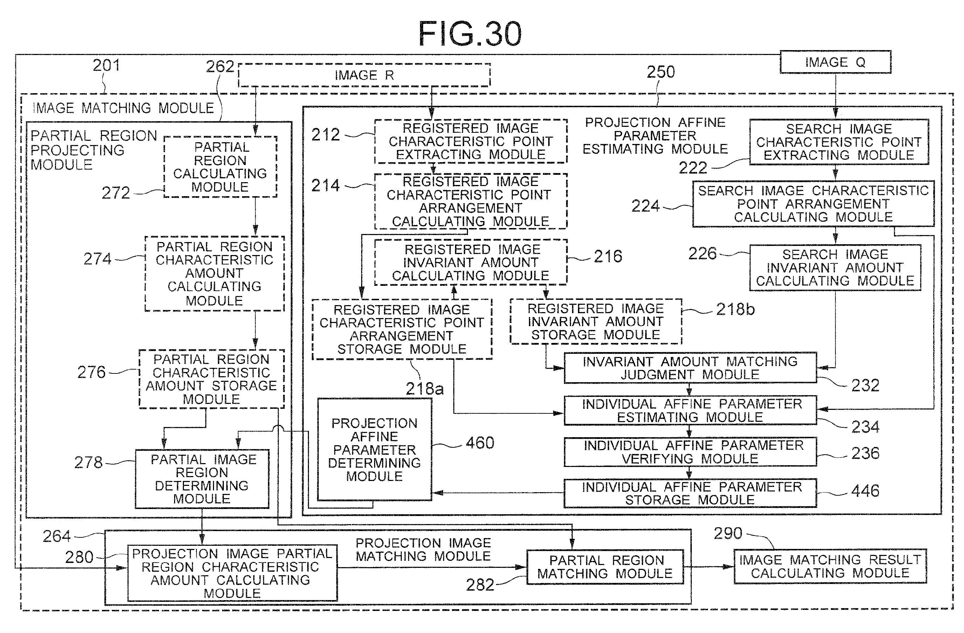

The CPU 2 rules the entire operations of the image matching device 1 through executing various kinds of software programs (computer programs), and executes functions of various kinds of modules shown in FIG. 1. This is the same in each of the embodiments (FIG. 30, FIG. 23) described hereinafter.

The storage medium 3 (a medium capable of being loaded to a computer) is a storage medium for storing various kinds of software programs and data required for executing the programs. The storage medium 4 is a storage medium for supplementing the storage medium 3. A preferable example of the storage medium 3 is a memory that operates at a high speed, such as a RAM. A preferable example of the storage medium 4 is a storage medium with a relatively large capacity, such as a hard disk. However, the storage medium 3 and the storage medium 4 are not limited only to such examples.

Further, a new storage medium or a storage module (not shown) as a storage device having both functions of the storage medium 3 and the storage medium 4 may also be used. In the embodiments described hereinafter, the storage medium 3 and the storage medium 4 are not specifically distinguished. That is, explanations are provided assuming a case of using the storage medium having the functions of the both.

The input module 5 may have an image information input interface function for inputting image information inputted from an image information acquiring module as an image information acquiring device such as a video camera, a digital camera, a scanner, or a CCD, an operation input interface function for inputting an operation inputted from an operation input module as an operation input device such as a keyboard, a mouse, various buttons, or a touch panel, etc. Further, the input module 5 may or may not include the image information acquiring module and the operation input module (include only the interface functions). Furthermore, the input module 5 may include a first image input module for inputting a search image (a first image), a second image input module for inputting a registered image (a second image), and the like.

Those inputted to the input module 5 may be two-dimensional still images, three-dimensional space data, moving pictures, physical amount having various spatial and time expansion such as a velocity field or a magnetic field, an image characteristic amount acquired by various kinds of arithmetic operations such as a convolution by a specific function, or data chronological changes thereof expressed in high dimensions.

Further, the storage media 3 and 4 may include an image storage region (an image information storage section including a search image information storage section and a registered image information storage section) for storing images (search image, registered image) inputted from the input module 5, and a temporary storage region (VRAM or the like). Furthermore, the storage media 3 and 4 may include an image matching result storage region for storing image matching result information. Moreover, the storage medium 3 and 4 may include a work region for a control module, a communication module, and the like.

The output module 6 may have an information output interface function which outputs various kinds of information to an image information output module as an image information output device which outputs image information such as a computer display and a television monitor (a display module as a display device), a projector, a printer (an image forming module as an image forming device), etc. Furthermore, the output module 6 may or may not include the image information output module (include only the interface function). Moreover, the image information output module may include a display control module which displays the image saved in the image storage region according to an instruction of a user.

Further, the image matching device 1 may include an information processing device (a computer) that can be used by the user, and may include a communication function regarding a communication network, which operates under a program control. Furthermore, in a case where the image matching device 1 has the communication interface function, the image matching device 1 may not include the input module 5 and the output module 6.

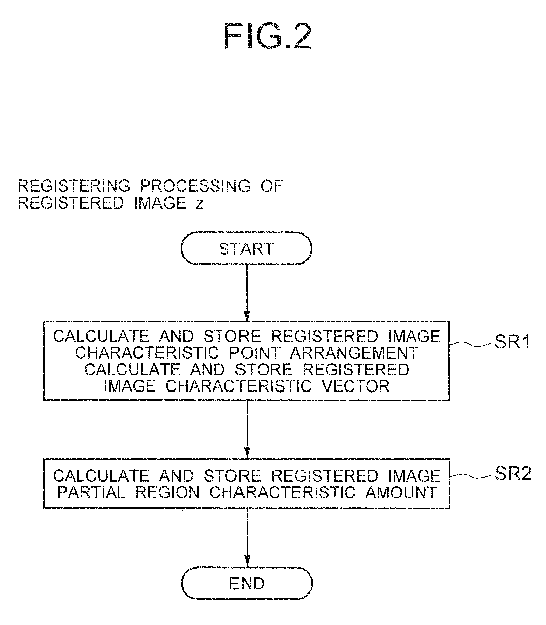

In the embodiment, the CPU 2 performs each processing (registering processing, matching processing, and the like) by executing the software programs of various kinds of modules and the like shown in FIG. 2 while referring to the storage media 3, 4 as necessary according to an image matching start request from the communication interface, the input interface, and the like. The image matching start request may be inputted operation input data or operation input signal or may be control data or control signal which controls the various kinds of devices or the like.

The programs for the various kinds of modules may be formed as an integrated type or as separate types. Thus, the programs may be formed as a registering processing program and a matching processing (search processing) program, or may be formed integrally as an image matching control program. As described, the programs (programs for causing the computer to execute the processing of each module) for causing the computer to function as each device (each module) of the embodiment are stored in the storage media.

The image matching device according to the embodiment of the present invention shown in FIG. 1 shows the structure built as hardware. The image matching device according to the embodiment of the present invention is an image matching device which performs matching of a first image (a target of search) on which a search question is imposed and another second image, and the image matching device includes: a partial region calculating module 272 which calculates one partial region or more of the image from the second image; a partial region characteristic amount calculating module 274 which calculates the characteristic amount regarding the partial regions; a parameter estimating module 236 which calculates the characteristic points from the first image and the second image, respectively, acquires the arrangements of the characteristic points, calculates the characteristic amounts or the characteristic vectors which characterize the arrangements of the characteristic points by utilizing geometric transformation invariants, judges whether or not the characteristic vector calculated from the first image and the characteristic amount or the characteristic vector calculated from the second image match with each other, and acquires the geometric transformation parameter in the vicinity of the characteristic point belonging at least to the arrangement of the characteristic points for the characteristic amount pair or the characteristic vector pair judged as being matched; a projection partial region determining module 278 which calculates the partial region on the first image corresponding to the partial region on the second image by utilizing the geometric transformation parameter; a projection image partial region characteristic amount calculating module 280 which calculates the characteristic amount regarding the partial region on the first image corresponding to the partial region on the second image calculated by the projection partial region determining module 278; and a partial region matching module 282 which judges whether or not the characteristic amount calculated by the projection image partial region characteristic amount calculating module 280 and the characteristic amount calculated by the partial region characteristic amount calculating module 274 match with each other.

Such structure operates to: acquire one partial region or more from the second image; calculate and store the characteristic amount regarding the partial region from the one partial region or more acquired from the second image; calculate the characteristic points from both the first image and the second image; acquire one arrangement of the characteristic points or more for both of the images; calculate the characteristic amount or the characteristic vector by utilizing the geometric transformation invariant from the arrangements of the characteristic points; judge whether or not the characteristic amount or the characteristic vector calculated from the first image match with the characteristic amount or the characteristic vector calculated from the second image; acquire the geometric transformation parameter between the first image and the second image from the characteristic arrangement pair that is the basis for calculating the characteristic amount pair or the characteristic vector pair judged as being matched; calculate the one partial region or more calculated from the second image corresponds to which partial region of the first image by using the geometric transformation parameter; calculate the characteristic amount of the partial region of the calculated first image; judge whether or not the characteristic amount calculated from the partial region calculated from the second image and the characteristic amount calculated from the partial region of the first image corresponding to the partial region calculated from the second image matches with each other; acquires the matching degree by utilizing the judgment result; and acquire the final image matching result by utilizing the matching degree.

Further, the embodiment of the present invention will be described in details by using a specific example. The projection parameter estimating module 250 estimates the parameters regarding the geometric transformation between the search image and the registered image. In the embodiment, affine transformation is used as the geometric transformation. Thus, the projection parameter estimating module 250 is expressed as the projection affine parameter estimating module 250 on the drawings. The parameters regarding the geometric transformation are expressed as affine parameters. The affine parameters are values of a, b, c, d, e, and f in a case where there is a relation expressed by a following expression established between a point (xy, xq) in the search image and a point (xr, yr) in the registered image, for example.

[Expression 1]

$$\begin{pmatrix} xq \\ yq \end{pmatrix} = \begin{pmatrix} a & b \\ c & d \end{pmatrix} \begin{pmatrix} xr \\ yr \end{pmatrix} + \begin{pmatrix} e \\ f \end{pmatrix}$$

Specifically, the projection parameter estimating module 250 includes: a registered image characteristic point extracting module 212; a registered image characteristic point arrangement calculating module 214; a registered image invariant calculating module 216; a registered image characteristic point arrangement storage module 218a; a registered image invariant storage module 218b; a search image characteristic point extracting module 222; a search image characteristic point arrangement calculating module 226; an invariant matching judgment module 232; an individual parameter estimating module 234; an individual parameter verifying module 246; and a projection parameter determining module 260.

The registered image characteristic point extracting module 212 extracts one characteristic point or more from the registered image. As a method for the registered image characteristic point extracting module 212 to extract the characteristic point, for example, a distribution of pixel values may be clustered, and the center of gravity of connected components of the pixels having the values belonging to the same cluster may be extracted as the characteristic point. Further, as disclosed in Patent Document 2, it is also possible to use a method which extracts the center of gravity of sum region of a plurality of connected regions as the characteristic point. Furthermore, it is also possible to use a known characteristic point extracting method which extracts the characteristic points or the like of corner detection or pixel value distribution as the characteristic points.

In the explanations below, described is a case where a method of extracting only the center of gravity of the connected region of the region that is not the background after the image is binarized is used as a method for the registered image characteristic point extracting module 212 to extract the characteristic points of the registered image. The characteristic extracting method used in the explanations below is preferable particularly for a case where the connected region that is not the background after the image is binarized is used as the partial region. It is because both are the information utilizing the connected regions, so that the information of the connected regions already acquired by the partial region calculating module can be re-utilized. The same applies not only for the case of the binarized connected regions but also for the connected regions of the pixels having the values belonging to the same cluster acquired by clustering the distribution of the pixel values.

The registered image characteristic point arrangement calculating module 214 calculates one characteristic point arrangement or more from the registered image. In the explanations below, the characteristic point arrangement calculated by the registered image characteristic point arrangement module 214 is a coordinate sequence of the characteristic points with an order.

Regarding each of the one or more characteristic point arrangements acquired from the registered image, the registered image invariant calculating module 216 calculates the characteristic amount that is the geometric transformation invariant (e.g., affine invariant, projection transformation invariant, similarity transformation invariant: hereinafter, explanations are provided by referring to a case of affine invariant) or the characteristic vector (registered image characteristic vector) having the geometric transformation invariants as the elements.

The registered image characteristic point arrangement storage module 218a stores the characteristic point arrangement information calculated by the registered image characteristic point arrangement calculating module 214. In the explanations below, the registered image characteristic point arrangement storage module 218a stores the coordinate sequence of the characteristic points with an order. Further, when storing the characteristic point arrangement, the registered image characteristic point arrangement storage module 218a stores the characteristic point arrangement and an index designating it uniquely in a corresponding manner.

The registered image invariant storage module 218b stores the characteristic amount or the characteristic vector calculated by the registered image invariant calculating module 216. In the explanations below, the registered image invariant storage module 218b stores the characteristic vector calculated by the registered image invariant calculating module 216. Further, when storing the characteristic vector, the registered image invariant storage module 218b stores the characteristic vector and an index designating it uniquely in a corresponding manner.

The search image characteristic point extracting module 222 calculates one or more characteristic points from the search image. Normally, a same method as the characteristic point extracting method of the registered image characteristic point extracting module 212 is used for the method for extracting the characteristic points from the image by the search image characteristic point extracting module 222. However, it is possible to change the method to extract the characteristic points from the image after changing the image preprocessing and the like according to the difference in the conditions for capturing the images. Hereinafter, described is a case where the search image characteristic point extracting module 222 extracts the characteristic points from the search image by using the same method as the characteristic point extracting method of the registered image characteristic point extracting module 212.

The search image characteristic point arrangement calculating module 224 calculates the one or more characteristic point arrangements from the search image. In the explanations below, the characteristic point arrangement calculated by the search image characteristic point arrangement calculating module 224 is the coordinate sequence of the characteristic points with an order.

Regarding each of the one or more characteristic point arrangements acquired from the search image, the search image invariant calculating module 226 calculates the characteristic amount that is the geometric transformation invariant (e.g., affine invariant) or the characteristic vector (search image characteristic vector) having the geometric transformation invariants as the elements. Normally, the search image invariant calculating module 226 uses the same method as the method for calculating the geometric transformation invariant by the registered image characteristic point arrangement calculating module 214. However, as disclosed in Patent Document 1, it is also possible to use a method which calculates a plurality of characteristic vectors from one characteristic point arrangement by considering cyclic permutation or the like. Hereinafter, described is a case where the search image invariant calculating module 226 uses the same method for calculating the geometric transformation invariant by the registered image characteristic point arrangement calculating module 214.

The invariant matching judgment module 232 judges whether or not the characteristic vector calculated from the registered image and the characteristic vector calculated from the search image matches with each other. As a method for the invariant matching judgment module 232 to judge whether or not the characteristic vectors match with each other, used is an existing method such as a method which calculates the similarity by a known method such as Manhattan distance, Euclid distance, an inner product of vectors, an angle between two vectors, etc., and judges as being matched when the calculated similarity is within a specific range defined in advance.

Regarding the characteristic vector pair judged as being matched by the invariant matching judgment module 232, the individual parameter estimating module 234 acquires the parameter between the characteristic point arrangement pair that is the basis for generating the characteristic vector pair. The parameter acquired by the individual parameter estimating module 234 is called as an individual affine parameter. In the explanations below, the affine transformation is used as the geometric transformation, so that the individual parameter estimating module 234 is expressed as the individual affine parameter estimating module 234 on the drawings. Further, the individual parameter is expressed as the individual affine parameter.

An example of the method for acquiring the individual affine parameter by the individual affine parameter estimating module 234 in a case where the affine transformation is used as the geometric transformation will be described. That is, it is considered that there is a relation of [Expression 2] according to [Expression 1] assuming that the characteristic point belonging to the characteristic point arrangement as the basis for generating the characteristic vector of the registered image side is $(x_k, y_k)$ ($k = 1, ---, m$; $m$ is the number of characteristic points belonging to the characteristic point arrangement), the characteristic point belonging to the characteristic point arrangement as the basis for generating the characteristic vector of the search image side is $(xd_k, yd_k)$ ($k = 1, ---, m$).

[Expression 2]

$$\begin{pmatrix} xd_k \\ yd_k \end{pmatrix} = \begin{pmatrix} a_i & b_i \\ c_i & d_i \end{pmatrix} \begin{pmatrix} x_k \\ y_k \end{pmatrix} + \begin{pmatrix} e_i \\ f_i \end{pmatrix}$$

By transforming this, following expressions can be acquired. That is, assuming that $\alpha$, $X$, $\beta$ are as follows as shown in [Expression 3], [Expression 4], [Expression 5], $\alpha = X\beta_i$ applies. From this, when $\beta$ is estimated by the least square method, the estimated value $\beta_{ih}$ shown in [Expression 6] can be acquired as [Expression 7].

[Expression 3]

$$\alpha = \begin{pmatrix} xd_1 \\ yd_1 \\ xd_2 \\ yd_2 \\ \cdots \\ xd_m \\ yd_m \end{pmatrix}$$

[Expression 4]

$$X = \begin{pmatrix} x_1 & y_1 & 0 & 0 & 1 & 0 \\ 0 & 0 & x_1 & y_1 & 0 & 1 \\ x_2 & y_2 & 0 & 0 & 1 & 0 \\ 0 & 0 & x_2 & y_2 & 0 & 1 \\ & & \cdot & \cdot & \cdot & \\ x_m & y_m & 0 & 0 & 1 & 0 \\ 0 & 0 & x_m & y_m & 0 & 1 \end{pmatrix}$$

[Expression 5]

$$\beta i = \begin{pmatrix} a\,i \\ b\,i \\ c\,i \\ d\,i \\ e\,i \\ f\,i \end{pmatrix}$$

[Expression 6]

$$\beta ih = \begin{pmatrix} a\ ih \\ b\ ih \\ c\ ih \\ d\ ih \\ e\ ih \\ f\ ih \end{pmatrix}$$

[Expression 7]

$$\beta ih = (X^T X)^{-1} X^T \alpha$$

Thereby, the individual affine parameter estimating module 234 acquires the individual affine parameters by using the expressions above, and takes the estimated values aih, bih, cih, dih, eih, and fih as the values of the affine parameters ai, bi, ci, di, ei, and fi, respectively.

The individual parameter verifying module 236 verifies whether or not the individual parameters calculated by the individual parameter estimating module 234 satisfy the setting condition. In the explanations below, the affine transformation is used as the geometric transformation, so that the individual parameter verifying module 236 is expressed as the individual affine parameter verifying module 236 on the drawings. Therefore, the individual affine parameter verifying module 236 performs processing for verifying whether or not the values of the individual affine parameters ai, bi, ci, di, ei, and fi calculated by the individual parameter estimating module 234 or the values calculated from those values satisfy the setting condition. The individual affine parameter verifying module 236 defines in advance the ranges for at least one or more values of the individual affine parameters ai, bi, ci, di, ei, fi or the values calculated from those values (this is called the setting condition), and verifies that the setting condition is satisfied only when all the values are within those ranges, and outputs the verification result of a case where the setting condition is satisfied to the parameter space vote number storage module 246.

The parameter space vote number storage module 246 has vote number (number of the characteristic point arrangements) storage regions, each of which stores the number of the characteristic point arrangement pairs judged as being matched by the individual affine parameter verifying module 36 by each group of roughly the same values, and the parameter space vote number storage module 246 stores the groups by classifying those to each group of the affine parameters having roughly the same values. How the vote numbers are stored specifically will be described later in details when describing the operations of the parameter space vote number storage module 246. Further, while not essential, it is preferable in terms of calculation to provide storage regions (parameter value storage regions) regarding the parameters a, b, c, d, e, and f by corresponding to each of the vote number storage regions. The embodiment is structured to include the parameter value storage regions.

The projection affine parameter determining module 260 acquires the representative affine parameters a, b, c, d, e, and f from the vote number stored in the parameter space vote number storage module 246. The projection affine parameter determining module 260 can acquire the representative affine parameters a, b, c, d, e, and f by utilizing the affine parameters ai, bi, ci, di, ei, and fi acquired from the characteristic arrangement pair corresponding to the vote number storage region whose vote number is the maximum, for example. Specific explanations will be provided when describing the operations of the projection affine parameter determining module 260 later.

The partial region projecting module 262 includes a partial region calculating module 272, a partial region characteristic amount calculating module 274, a partial region characteristic amount storage module 276, and a projection partial region determining module 278.

The partial region calculating module 272 calculates one or more partial regions from the registered image (search-target image). The partial region calculating module 272 performs clustering of the distribution of the pixel values of the registered image, for example, to calculate a connected region of the pixels having the values belonging to the same cluster or the circumscribed rectangle as the partial region. A connected region of a drawing area after the image is binarized (a region that is not the background) or a circumscribed rectangle thereof may be included as the connected region or the circumscribed rectangle. Further, as a method for the partial region calculating module 272 to calculate the partial region, a method which calculates the sum region of a plurality of connected regions or the circumscribed rectangles thereof may be used as disclosed in Patent Document 2. Hereinafter, described is a case where the partial region calculating module 272 calculates, as the partial region, the circumscribed rectangle of the connected region that is not the background after the image is binarized.

The partial region characteristic amount calculating module 274 acquires the partial region characteristic amount (hereinafter, this may be called as a registered image partial region characteristic amount) for each of the partial regions calculated by the partial region calculating module 272. As the partial characteristic amount, the image itself of the partial region may be used or any characteristic amounts may be used as long as it is the characteristic amount capable of writing the character of the partial region, e.g., existing ratio of the pixels that are not the background existing in the partial region (normally, the region that is not the background in a character string image is expressed in black in many cases, so that this is called as a black pixel hereinafter), a value acquired by dividing the value of the sum of the pixel values in the partial region with a region square measure. Further, it is also preferable to use the characteristic amount that is considered effective for character recognition, such as luminance gradient in the partial region. Undoubtedly, the characteristic amount is not limited to scalar values but may be vector values. In the explanations below, the existing ratio of the black pixels existing in the partial region (circumscribed rectangle) is used.

The partial region characteristic amount storage module 276 stores the partial region characteristic amount calculated by the partial region characteristic amount calculating module 274. Hereinafter, described is a case where the partial region characteristic amount storage module 276 stores the four corner coordinates of the partial region (circumscribed rectangle) along with the partial region characteristic amount.

The projection partial region determining module 278 investigates which of the partial region on the search image corresponds to the partial region on the registered image by using the affine parameter showing the degree of transformation between the registered image and the search image estimated by the projection affine parameter estimating module 250. Specifically, the projection partial region determining module 278 acquires the partial region on the search image through projecting arbitrary pixels belonging to the registered image partial region on the search image by using [Expression 1] described above for the typical registered image partial region. Further, in a case where the circumscribed rectangle of the connected region is employed as the partial region of the registered image, the projection partial region determining module 278 acquires the region in a following manner. That is, assuming that the four corner coordinates of the circumscribed rectangle showing the registered image partial region are (xr1, yr1), (xr2, yr2), (xr3, yr3), and (xr4, yr4), the partial region on the search image to be acquired is a rectangle. Assuming that the coordinates of the four vertexes of the rectangle on the search image are (xq1, yq1), (xq2, yq2), (xq3, yq3), and (xq4, yq4), the projection partial region determining module 278 acquires (xqi, yqi) (i = 1, 2, 3, 4) according to a following expression [Expression 8] by using (xri, yri) (i = 1, 2, 3, 4) and a, b, c, d, e, f.

[Expression 8]

$$
\begin{pmatrix} xq_i \\ yq_i \end{pmatrix} = \begin{pmatrix} a & b \\ c & d \end{pmatrix} \begin{pmatrix} xr_i \\ yr_i \end{pmatrix} + \begin{pmatrix} e \\ f \end{pmatrix}
$$

It is unnecessary to project the arbitrary pixels belonging to the partial region, so that there is an advantage of being able to acquire the partial image on the search image efficiently in general (in a case where the number of pixels in the partial region is "5" or more).

Regarding the typical registered image partial region, the partial region on the search image can be acquired by projecting the arbitrary pixels belonging to the registered image partial region on the search image by using [Expression 8] described above. Further, the projection partial region determining module 278 is for determining the region to which the region is projected, so that it is unnecessary for the projection partial region determining module 278 to acquire the values of the pixels belonging to the region as the values of the corresponding pixels with [Expression 8] described above.

Further, the region projected on the search image does not necessarily exist on the search image as in cases with parameters of poor estimation accuracy, cases of images where one of the images includes the other image, for example. In such cases projections is to be stopped. Therefore, all the registered image partial regions may not necessarily be projected on the search image. For dealing with such cases, the number of times the projection is not stopped is calculated, and it is stored temporarily.

The partial region projecting module 262 includes a projection image partial region characteristic amount calculating module 280 and a partial region matching module 282.

The projection image partial region characteristic amount calculating module 280 acquires a characteristic amount regarding the partial region projected on the search image. The characteristic amount normally is the same characteristic amount that is the same kind as the characteristic amount calculated by the partial region characteristic amount calculating module 274. The characteristic amount can be acquired in a following manner. That is, first, the projection image partial region characteristic amount calculating module 280 projects the partial region image that is projected on the search image onto the search image by utilizing the fact that the correspondence between the coordinate $(xr, yr)$ on the registered image and the coordinate $(xq, yq)$ on the registered image is [Expression 9] that is acquired by transforming [Expression 1].

[Expression 9]

$$\begin{pmatrix} xr \\ yr \end{pmatrix} = \begin{pmatrix} a & b \\ c & d \end{pmatrix}^{-1} \begin{pmatrix} xq - e \\ yq - f \end{pmatrix}$$

Projection of this case is projection as an image, so that it is necessary to acquire the values of the pixels of the search image belonging to the partial region projected on the search image as the values of the corresponding pixels on the registered image with the above Expression. Then, the projection image partial region characteristic amount calculating module 280 calculates the characteristic amount (hereinafter, this may be called a search image partial region characteristic amount) from the image projected on the registered image.

Further, in a case where the circumscribed rectangle of the connected region is used as the partial region and the existing ratio of the black pixels existing in the partial region (circumscribed rectangle) is used as the characteristic amount, projection image partial region characteristic amount calculating module 280 acquires the search image partial region characteristic amount on the search image without projecting on the registered image. This is because the black pixel existing ratio is the affine invariant. Therefore, this is the same for the cases where the other affine invariants are used as the characteristic amount.

The partial region matching module 282 performs matching of the characteristic amount of the search image partial region corresponding to the registered image partial region whose registered image partial region characteristic amount is acquired and the registered image partial region characteristic amount. As a method for the partial region matching module 282 to match the characteristic amount, in a case where the characteristic amount is a scalar value, for example, it is possible to use a method which considers that the characteristic amounts match with each other when the difference and the ratio between the characteristic amounts are within specific ranges set in advance. Further, in a case where the characteristic amount is a vector value, it is possible to use a method which considers that the characteristic amount match with each other when values acquired by calculating Manhattan distance, Euclid distance (or a square thereof), an inner product of vectors, an angle between two vectors, or the like, are within specific ranges set in advance.

The image matching result calculating module 290 at least identifies the registered image corresponding to the search image at last by utilizing the number (partial region number) judged by the partial region matching module 282 as matched for each of the registered images. Specific explanations will be provided when describing operations of the image matching result calculating module 290 later in details.

Next, the entire operations of the embodiment will be described in details. The entire operations of the embodiment can be divided into registering processing and search processing. The registering processing is processing for respectively calculating the registered image partial region characteristic amount, the registered image characteristic arrangement, the registered image characteristic vector from the inputted registered image. Those calculated results are stored. The search processing is processing for identifying the registered image corresponding to the search image by referring to the registered image partial region characteristic amount, the registered image characteristic point arrangement, the registered image characteristic vector already calculated from the inputted search image.

<Registering Processing>

FIG. 2 is a flowchart of the registering processing executed by the image matching device of the embodiment. Referring to FIG. 2, in the registering processing, processing of step SR1 and step SR2 is executed. In the step SAR1, the registered image characteristic point extracting module 212 extracts the characteristic points from the registered image, the registered image characteristic point calculating module 214 calculates the characteristic point arrangement, and the registered image invariant module 216 calculates the characteristic vector. In the step SR2, the partial region projecting module 262 calculates the registered image partial region characteristic amount from the registered image.

In the operations of this embodiment, it is assumed that one or more registered images are to be supplied, and the registering processing constituted with the step SR1 and the step SR2 is to be executed for all the registered images. In the explanations below, a reference code "z" uniquely representing the registered image as the target of the registering processing is used for describing the registering processing executed on the registered image z.

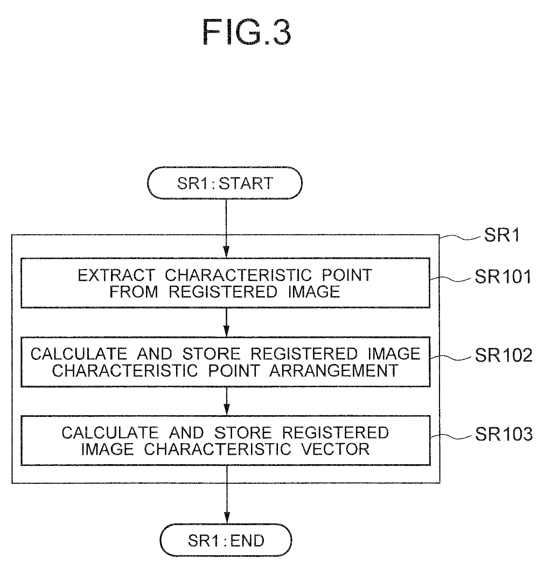

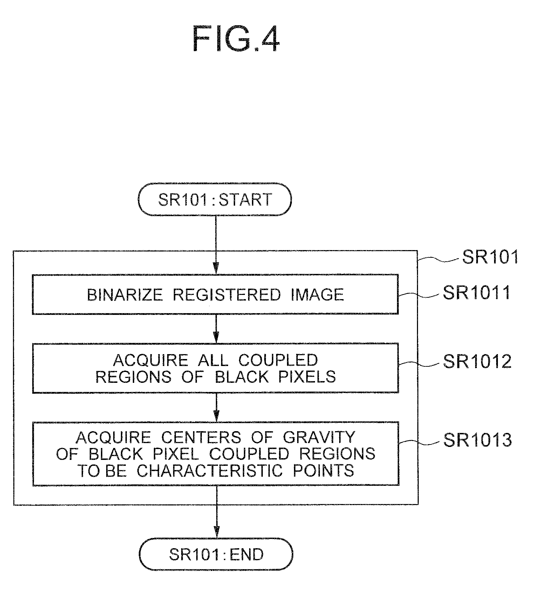

First, the processing of the step SR1 will be described. Referring to FIG. 3, first, the registered image characteristic point extracting module 212 performs processing for extracting the characteristic points from the registered image z (step SR101). FIG. 4 is a flowchart of the processing for extracting the characteristic points according to this embodiment. Referring to FIG. 4, the registered image characteristic point extracting module 212 first binarizes the registered image z (step SR1011), acquires all the connected regions of black pixels within the image (step SR1012), and calculates the centers of gravity regarding each of the connected regions to extract those as the characteristic points (step SR1013). When extracting the characteristic points, it is possible to take a new point that is calculated from two or more centers of gravity other than the center of gravity as the characteristic point as depicted in Patent Document 2. However, such case is not taken into consideration for simplifying the explanations.

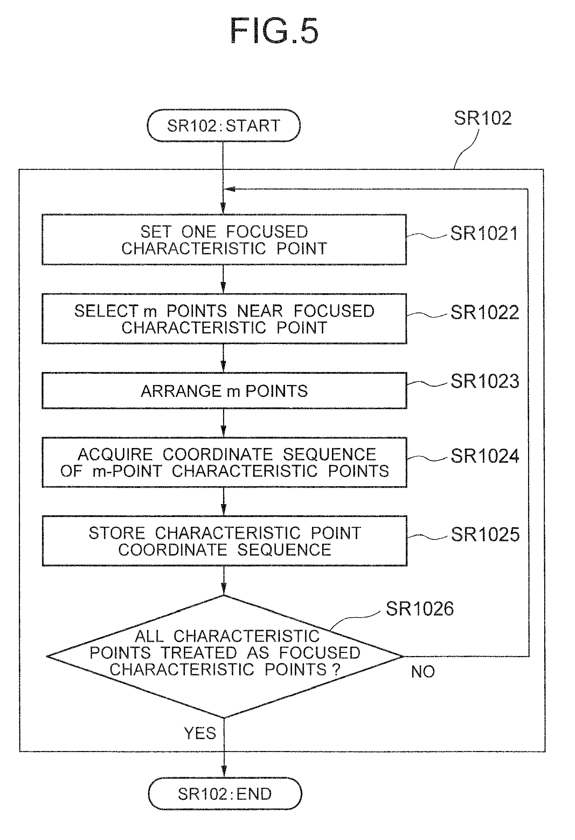

Then, the registered image characteristic point arrangement calculating module 214 calculates the characteristic point arrangement based on the characteristic points calculated by the registered image characteristic point extracting module 212 (step SR102 of FIG. 3). As a method for the registered image characteristic point arrangement calculating module 214 to calculate the characteristic point arrangement, the method disclosed in Patent Document 1 or Patent Document 2 can be utilized. However, for simplifying the explanations, the embodiment is described to perform the processing as follows by referring to FIG. 5 that is a flowchart of calculation/storage processing of the characteristic point arrangement. That is, the registered image characteristic point arrangement calculating module 214 sets a characteristic point rpid on which the processing of the step SR102 of FIG. 4 has not been performed yet out of the characteristic points acquired from the registered image z as one of focused characteristic points (step SR1021 of FIG. 5), selects m-number of points located closest (step SR1022 of FIG. 5), acquires a characteristic point rpidn that is closest to the characteristic point rpid among the m-number of points, and arranges the m-number of points clockwise by having the characteristic point rpidn as the start point and having the rpid as the center (step SR1023 of FIG. 5), and generates a coordinate sequence of the characteristic points according to the arranged order (step S1024 of FIG. 5). Then, the registered image characteristic point arrangement calculating module 214 stores the generated coordinate sequence of the characteristic points to the registered image characteristic point arrangement storage module 218a (step SR1025 of FIG. 5). It is preferable considering the latter processing to correspondingly store the coordinate sequence of the characteristic points along with identifier information that identifies it uniquely in a related manner when storing the coordinate sequence of the characteristic points to the registered image characteristic point arrangement storage module 218a. At last, the registered image characteristic point arrangement calculating module 214 judges whether or not all the characteristic points have been processed as the focused characteristic points (step SR1026 of FIG. 5). The registered image characteristic point arrangement calculating module 214 ends the processing of the step SR102 of FIG. 4 when the judgment result is YES, and performs the processing of step SR1021 of FIG. 5 when the judgment result is NO. Thereby, the processing is repeated until the coordinate sequences of the characteristic points for all the characteristic points of the registered image z are acquired by the registered image characteristic point arrangement calculating module 214.

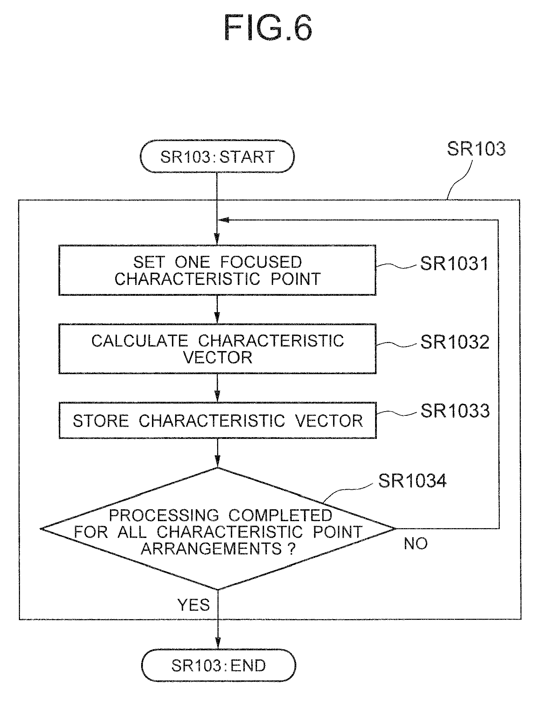

Then, the registered image invariant calculating module 216 calculates the characteristic vector based on the characteristic point arrangement calculated by the registered image characteristic point arrangement calculating module 214. Information of the characteristic vector is stored to the registered image characteristic point arrangement storage module 218a by the registered image invariant calculating module 216 (step SR103 of FIG. 3). FIG. 6 is a flowchart showing the processing of the step SR103 of this embodiment.

Referring to FIG. 6, the registered image invariant calculating module 216 first sets a given characteristic point arrangement as a focused characteristic point arrangement (step SR1031). Then, the registered image invariant calculating module 216 performs the processing for calculating the characteristic vector regarding the characteristic point arrangement (step SR1032). As a method for the registered image invariant calculating module 216 to calculate the characteristic vector, the processing disclosed in Patent Document 2, for example, may be executed. Then, the registered image invariant calculating module 216 stores the calculated characteristic vector to the registered image characteristic vector storage module 218b (step SR1033). It is preferable for the latter processing to store the characteristic point arrangement along with identifying information that identifies the characteristic point arrangement uniquely by utilizing the fact that the characteristic point arrangement and the characteristic vector are in a one-to-one relationship. At last, the registered image invariant calculating module 216 judges whether or not the processing for calculating the characteristic vector has been completed by taking all the characteristic points as the focused characteristic point arrangement (step SR1034). The registered image invariant calculating module 216 ends the processing of the step SR103 of FIG. 3 when the judgment is YES, and performs the processing of step SR1031 of FIG. 6 when the judgment result is NO. Thereby, the processing is repeated until the characteristic vectors regarding all the characteristic point arrangements of the registered image z are acquired.

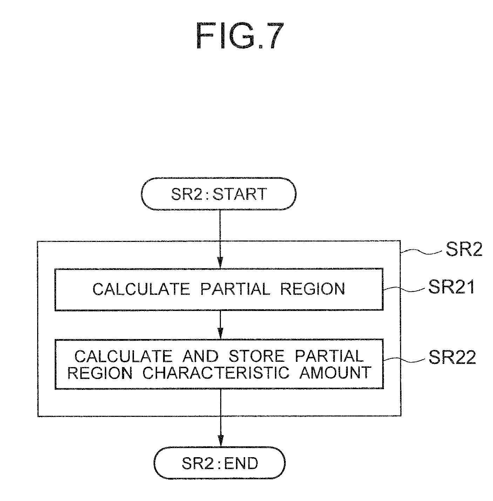

Next, the processing of step SR2 shown in FIG. 2, i.e., the processing executed by the partial region projecting module 262 for calculating the registered image partial region characteristic amount from the registered image, will be described. FIG. 7 is a flowchart showing the operation of the step SR2 shown in FIG. 2. Referring to FIG. 7, the step SR2 shown in FIG. 2 is constituted with step SR21 and step SR22.

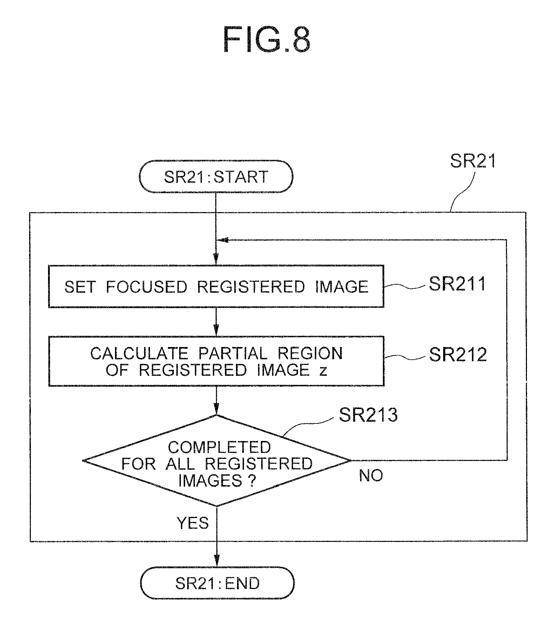

First, in the step SR21, one or more partial regions are calculated from the registered image. Hereinafter, explanations will be provided by referring to a flowchart of FIG. 8 which shows the operation of the step SR21.

In the step SR211 shown in FIG. 8, the partial region calculating module 272 sets one registered image z on which calculation of the partial region has not been performed. Then, in the step SR212, the partial region calculating module 272 calculates the partial region of the set registered image z. The partial region may be defined as an arbitrary partial region. However, in this embodiment, one or more circumscribed rectangles of the connected regions of the black pixels acquired from the registered image z are taken as the partial region. In this case, the registered image characteristic point extracting module 212 acquires all the connected regions of the black pixel in the image in the step SR1012 of FIG. 4. Thus, there is such an advantage that it becomes unnecessary to calculate the connected regions again through re-utilizing the calculation result.

Then, in the step SR213, the partial region calculating module 272 judges whether or not the processing for calculating the partial region of the registered image z has been executed for all the registered images. The partial region calculating module 272 ends the processing of the step SR21 when the judgment result is YES, and performs the processing of SR211 when the judgment result is NO.

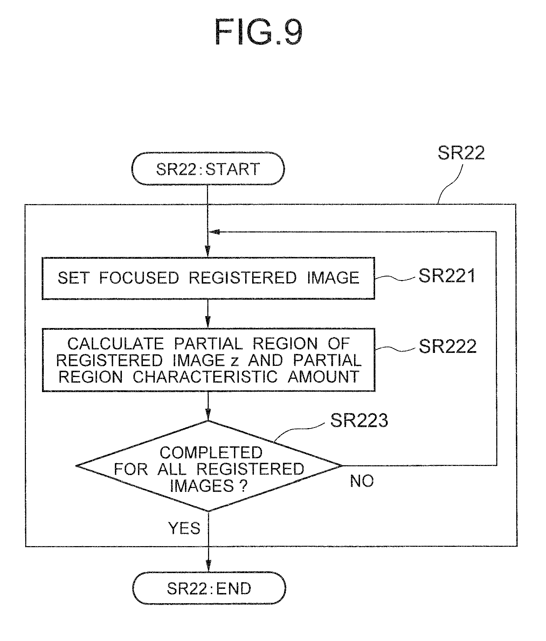

[0072] Then, in the step SR22 of FIG. 7, the partial region characteristic amount storage module 276 stores the partial region characteristic amount along with the four corner coordinate of the partial region (circumscribed rectangle). Hereinafter, the explanations will be provided by referring to a flowchart of FIG. 9 which shows the operation of the step SR22.

In the step SR222 of FIG. 9, the partial region characteristic amount calculating module 274 acquires the partial region characteristic amount (registered image partial region characteristic amount) for each of the partial regions calculated by the partial region calculating module 272.

Further, in the step SR221 of FIG. 9, the partial region characteristic amount storage module 276 stores the calculated partial region and the partial region characteristic amount.

Then, in the step SR223, the partial region calculating module 272 and the partial region characteristic amount calculating module 274 judge whether or not calculation of the partial region and the partial region characteristic amount has been executed for all the registered images. The partial region calculating module 272 and the partial region characteristic amount calculating module 274 end the processing of the step SR22 when the judgment result is YES, and performs processing of the step SR221 and the step SR222, respectively, when the judgment result is NO.

<Search Processing>

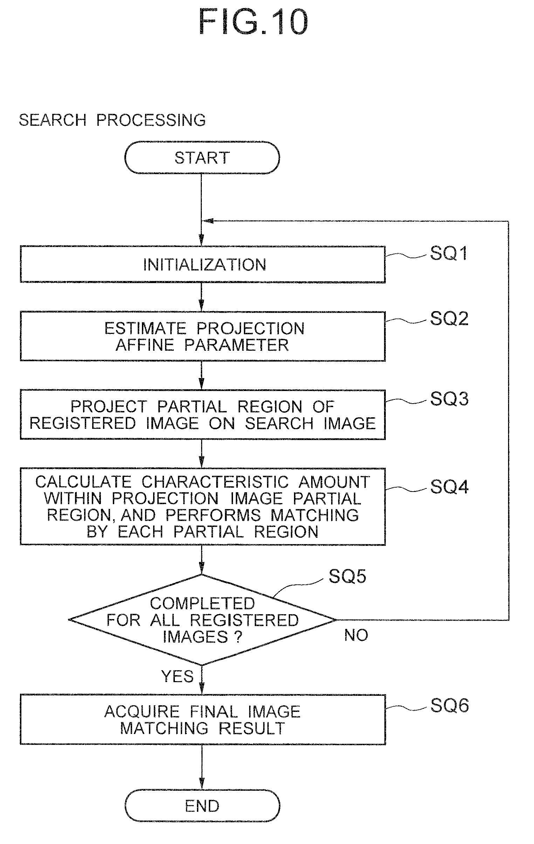

Next, the search processing will be described. FIG. 10 is a flowchart of the search processing executed by the image matching device of this embodiment. Referring to FIG. 10, the search processing includes each processing of step SQ1, step SQ2, step SQ3, step SQ4, step SQ5, and step SQ6. The step SQ1 is the processing for setting one registered image z as the target for performing the steps SQ2, SQ3, and SQ4. In the step SQ2, executed is processing for estimating the affine parameter between the search image and the registered image z set in the step SQ1. In the step SQ3, executed is processing for projecting the registered image partial region acquired from the registered image set in the step SQ1 on the search image. In the step SQ4, executed is processing for calculating the characteristic amount from the image within the partial region projected on the search image and matching it with the corresponding registered image partial region characteristic amount. In the step SQ5, executed is processing for judging whether or not the step SQ2, the step SQ3, and the step SQ4 are executed for all the registered images. Processing of step SQ6 is executed when judged as YES, and processing for returning to the step SQ1 is executed when judged as NO. In the step SQ6, executed is processing for identifying the registered image corresponding to the search image supplied at last by utilizing the result acquired at least in the step SQ4. Hereinafter, the processing of each step will be described in a specific manner.

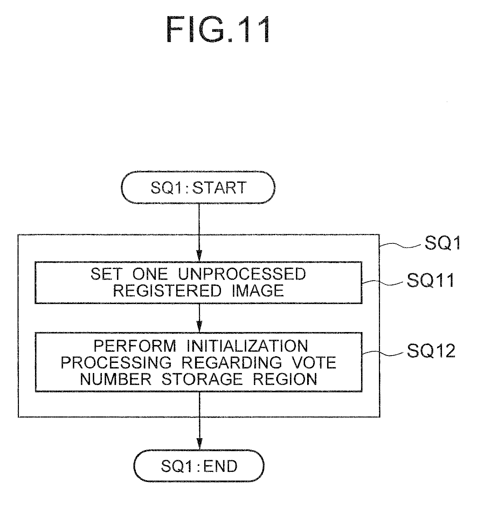

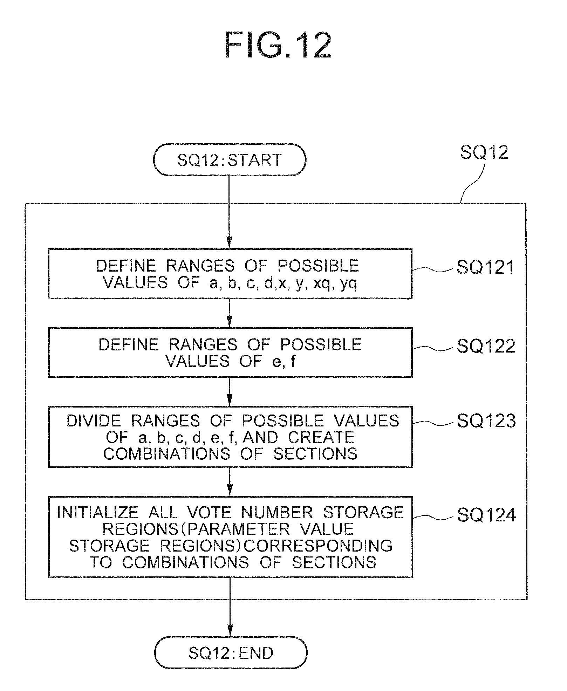

Referring to FIG. 11 which shows the operation of the step SQ1, specifically, the partial region calculating module 272 performs processing for setting one of the registered images on which partial region matching calculation with respect to the search image is not performed as a focused registered image (step SQ11). The registered image set herein is defined as the registered image z. Then, the parameter space vote number storage module 246 performs initialization processing regarding the vote number storage region (step SQ12). The operation of the step SQ12 will be described by referring to FIG. 12.

The parameter space vote number storage module 246 first defines in advance the range of possible values of the parameters a, b, c, and d and the range of possible values of the point (xr, yr) on the registered image and the point (xq, yq) on the search image (step SQ121). Regarding the range of the possible values a, b, c, and d mentioned above, the values of a, b, c, and d used when the individual affine parameter investigating module 236 performs investigations can be used, for example. For example, the possible values of a are defined as $amin \leqq a \leqq amax$, the possible range of b is defined as $bmin \leqq b \leqq bmax$, the possible range of c is defined as $cmin \leqq c \leqq cmax$, and the possible range of d is defined as $dmin \leqq d \leqq dmax$.

Further, the parameter space vote number storage module 246 acquires xmax and ymax to be an image having the region defined with $1 \leqq x \leqq xmax$ and $1 \leqq y \leqq ymax$. For this, the size (width or height) of the registered image z may be used. Similarly, regarding (xq, yq), the parameter space vote number storage module 246 acquires xqmax and yqmax to be an image having the region defined with $1 \leqq xq \leqq xqmax$ and $1 \leqq yq \leqq yqmax$ from the size (width or height) of the search image. Then, the parameter space vote number storage module 246 defines the ranges of the possible values of e and f (step SQ122).

As an example of a method for the parameter space vote number storage module 246 to acquire the information, there is a following method. As can be seen from [Expression 1], there is a following relation between the point (x, y) on the registered image and the point (xq, yq) on the search image (an image having the region defined with $1 \leqq xq \leqq xqmax$ and $1 \leqq yq \leqq yqmax$).

$$xq = ax + by + e$$

$$yq = cx + dy + f$$

These can be rewritten as follows.

$$e = xq - (ax + by)$$

$$f = yq - (cx + dy)$$

Therefore, assuming that the range of possible values of e is $emin \leqq e \leqq emax$ and $fmin \leqq f \leqq fmax$, following relations can be acquired.

$$emin = \min(xq - (ax + by))$$

$$emax = \max(xq - (ax + by))$$

$$\text{fmin} = \min(yq - (cx + dy))$$

$$\text{fmax} = \max(yq - (cx + dy))$$

Note here that "min(•)" shows the value that makes the expression within parentheses the minimum for the combinations of all the possible values of a, b, c, d, x, y, xq, yq. Similarly, "max(•)" shows the value that makes the expression within parentheses the maximum for the combinations of all the possible values of a, b, c, d, x, y, xq, yq.

In cases where $a \fallingdotseq 1$, $b \fallingdotseq 0$, $c \fallingdotseq 0$, and $d \fallingdotseq 1$, it is natural to think that a and d take only positive values and b and c can take positive values and negative values. In other words, it is natural that amin, amax, bmax, cmax, dmin, and dmax take positive values and bmin and cmin take negative values. Following expressions can be defined.

$$\text{emin} = \text{xqmax} - (\text{amax} * \text{xmax} + \text{bmax} * \text{ymax})$$

$$\text{emax} = \text{xqmin} - (\text{bmin} * \text{ymax})$$

$$\text{fmin} = \text{yqmin} - (\text{cmax} * \text{xmax} + \text{dmax} * \text{ymax})$$

$$\text{fmax} = \text{yqmax} - (\text{cmin} * \text{xmax})$$

Note here that symbol "*" is a symbol for explicitly showing multiplication. Naturally, the ranges of possible values of e and f may be defined separately by considering other conditions acquired in advance, the ranges of possible values of e and f defined in advance may be used, or the ranges of final possible values of e and f may be defined by combining those two kinds of ranges.

Then, the range of possible values defined for each parameter is divided (step SQ123).

For example, sections acquired by dividing the section of [amin, amax] into Na pieces are defined as sections a1, a2, ---, aNa. Similarly, sections b1, ---, bNb, sections c1, ---, cNc, sections d1, ---, dNd, sections e1, ---, eNe, and sections f1, ---, fNf are acquired. Values defined in advance may be used for Na, Nb, Nc, Nd, Ne, and Nf, or those values may be defined based on properties required for the sections (restrictions or the like regarding the size of the sections). Hereinafter, it is assumed that the numbers of Na, Nb, Nc, Nd, Ne, and Nf are defined in advance. In this case, regarding each parameter, calculation for finding what kind of value range each of divided sections is in is executed and it is stored in a storage region that is not shown. The number of the vote number storage regions and parameter value storage regions need to be sufficient for storing all the combination of the sections. Further, combinations of the sections satisfying following properties regarding combinations of given sections such as ad, bd, cd, dd, ed, and fd may be expressed by a phrase "combinations of neighboring sections". Such properties are the properties the combinations of the sections (divisions of the sections) az, bz, cz, dz, ez, and fz satisfy following expressions.

$$\text{ad} - 1 \leqq \text{az} \leqq \text{ad} + 1$$

$$\text{bd} - 1 \leqq \text{bz} \leqq \text{bd} + 1$$

$$cd - 1 \leqq cz \leqq cd + 1$$

$$dd - 1 \leqq dz \leqq dd + 1$$

$$ed - 1 \leqq ez \leqq ed + 1$$

$$fd - 1 \leqq fz \leqq fd + 1$$

Then, the parameter space vote number storage module 246 initializes the vote number stored in the vote number storage region corresponding to the combination of each section to "0" (step SQ124).
Further, the parameter space vote number storage module 246 also initializes the parameter storage region corresponding to the vote number storage region (substitute "0" to variable showing each parameter).

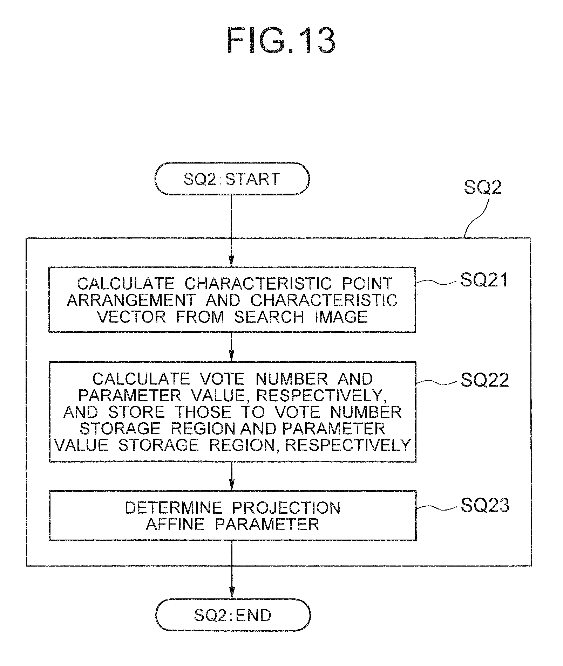

Next, the step SQ2 will be described by referring to FIG. 13 which shows the operation of the step SQ2. The step SQ2 is constituted with step SQ21, step SQ22 and step SQ3. The step SQ21 is processing for calculating the characteristic point arrangement and the characteristic vector from the search image as in the case of the registered image. The step SQ22 is processing for calculating and storing the vote number and the parameter value stored in the vote number storage region and the parameter value storage region from the characteristic point arrangement and the characteristic vector regarding the registered image z and the characteristic vector regarding the search image. The step SQ23 is processing for determining the affine parameter between the registered image z and the search image by utilizing the vote number and the parameter value stored in the vote number storage region and the parameter value storage region. Hereinafter, processing of the steps SQ21, SQ22, and SQ23 will be described.

The step SQ21 can be achieved by performing the same processing as that of the step SR1 by the search image characteristic point extracting module 222, the search image characteristic point arrangement calculating module 224, and the search image invariant calculating module 226. Thus, explanations thereof are omitted. As a result, normally, one each or more of the characteristic point arrangement and the characteristic vector regarding the search image are to be calculated. Those may be temporarily stored in the storage region, not shown (naturally, it is not required to calculate the characteristic point arrangement and the characteristic vector regarding the search image by using the same method as the case of the registered image. For example, as shown in Patent Document 1 and Patent Document 2, new characteristic point arrangement and characteristic vector corresponding to one or more cyclic permutation regarding a given characteristic point arrangement may be calculated).

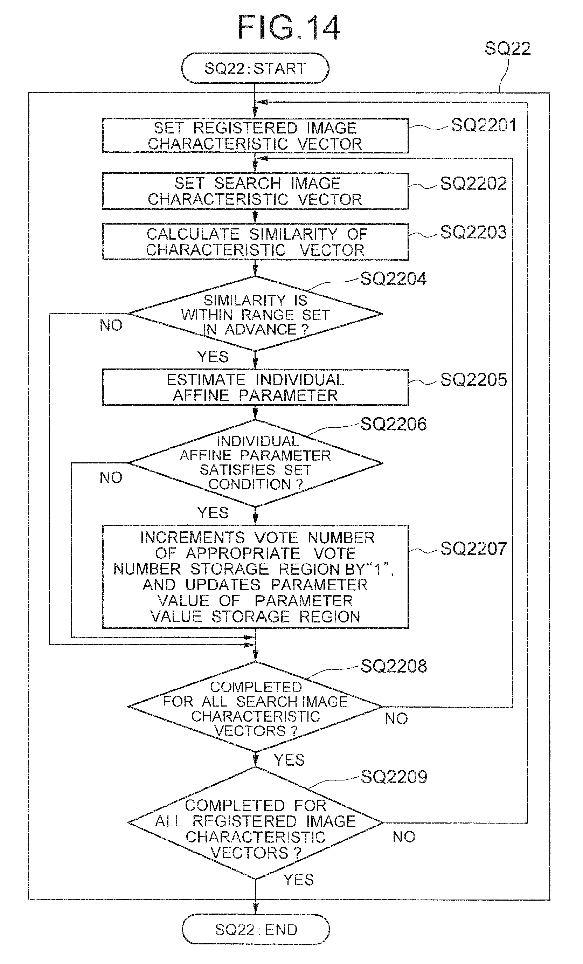

Next, the operation of the step SQ22 will be described by referring to a flowchart of FIG. 14 which shows the operation of the step SQ22.

First, the invariant matching judgment module 232 sets one of the registered image characteristic vectors on which the processing of SQ22 has not been performed yet (step SQ2201). Then, the invariant matching judgment module 232 sets one of the search image characteristic vectors on which the processing of SQ22 has not been performed yet (step SQ2202). Thereafter, the invariant matching judgment module 232 calculates the similarity between the focused registered image characteristic vector and the focused search image characteristic vector (step SQ2203). In the explanations below, it is assumed that the similarity is a value that is a square of the Euclid distance between the two vectors (however, not limited only to that).

Then, the invariant matching judgment module 232 judges whether or not the both vectors match with each other based on the similarity calculated in the step SQ2203 depending on whether or not the similarity is within the range set in advance (step SQ2204). In a case where the value that is a power of the Euclid distance between the two vectors is the similarity, for example, the invariant matching judgment module 232 can consider that the both vectors match with each other when the value that is a power of the Euclid distance between the two vectors is smaller (or equal to or less) than a positive value (relatively small in general) set in advance. The processing of step SQ2205 is performed when judged as matched, and the processing of step SQ2209 is performed if not.

Then, the individual affine parameter estimating module 234 estimates the individual affine parameter (step SQ2205). The estimating method of this embodiment is already described in the explanation of the functions regarding the individual affine parameter estimating module 234.

Then, the individual affine parameter verifying module 236 verifies the individual affine parameter (step SQ2206).

The estimating method of this embodiment is already described in the explanation of the functions regarding the individual affine parameter estimating module 234. For example, a case where the parameters ai, bi, ci, and di regarding admin, amax, bmin, bmax, cmin, cmax, dmin, and dmax set in advance satisfy all the relations amin≦ai≦amax, bmin≦bi ≦bmax, cmin≦ci≦cmax, dmin≦di≦dmax may be defined as verification OK, and other cases may be defined as verification NG. When judged as verification OK, the processing proceeds to step SQ2207. When judged as verification NG, the processing proceeds to step SQ2209.

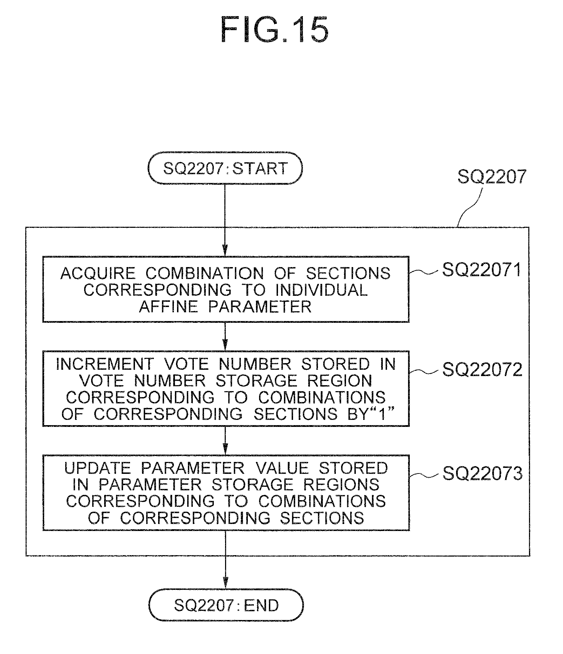

Then, the parameter space vote number storage module 246 increments the vote number of the proper vote number storage region by "I", and updates the parameter value stored in the proper parameter value storage region (step S2207) according to the value of the individual affine parameter. Hereinafter, explanations will be provided by referring to FIG. 15 which shows the operation of the step SQ2207.

First, the parameter space vote number storage module 246 acquires the combination of the sections by utilizing a set of the affine parameter values between the registered image characteristic point arrangement and the search image characteristic point arrangement estimated when it is judged by the affine parameter verifying section 236 as matched and by utilizing a result of calculation executed in the step S123, which is "calculation executed for finding what kind of parameter value range each of the divided sections is in" (step SQ22071).

Then, the parameter space vote number storage module 246 increments the vote number stored in the vote number storage region corresponding to the combination of the corresponding sections by "1" (step SQ22072). Then, the parameter space vote number storage module 246 updates the parameter value stored in the parameter value storage region corresponding to the combination of the corresponding sections (step SQ22073). For example, update is executed as follows. That is, regarding the parameter a, the value ava of the parameter a after the update can be acquired from a following expression provided that the vote number before incremented by "1" is an, the value of the parameter before the update is avb, and the value of the individual affine parameter is ai.

$$ava = ((avb * an) + ai) \div (an + 1)$$

Note here that the symbol "*" is a symbol which explicitly shows multiplication. The other parameters b, c, d, e, and f can also be calculated in the same manner. Through these calculations, the parameter value stored in the parameter value storage region becomes the average of the parameter values corresponding to the combinations of the corresponding sections as a result.

In the step SQ2207 described above, the operation is executed to update only the vote number and the parameter value corresponding to the combination of the corresponding sections. However, it is not necessarily defined to be those. For example, the vote number and the parameter value of the combination of the sections neighboring to the combination of the corresponding sections can also be updated along therewith.

Then, the invariant matching judgment module 232 judges whether or not the processing for all the search image characteristic vectors regarding the focused registered image characteristic vector has been completed (step SQ2208). The processing of step SQ2209 is executed when judged as YES, and the processing of the step SQ2202 is started again when judged as NO.

[0093] Then, the parameter space vote number storage module 246 judges whether or not the processing for the focused registered image characteristic vector has been completed (step SQ2209). The processing of step SQ22 is ended when judged as YES, and the procedure is returned to the step SQ220 when judged as NO.

[0094] Next, the processing of step SQ23 will be described. In the step SQ23, the projection affine parameter determining module 260 detects the vote number storage region where the maximum vote number is stored, and determines the parameter value stored in the parameter value storage region corresponding to the vote number storage region as the projection affine parameter. Handling of the case where there are two or more vote number storage regions where the maximum vote number is stored will be described later, and a case where there is one vote number storage region where the maximum vote number is stored will be described for the moment.

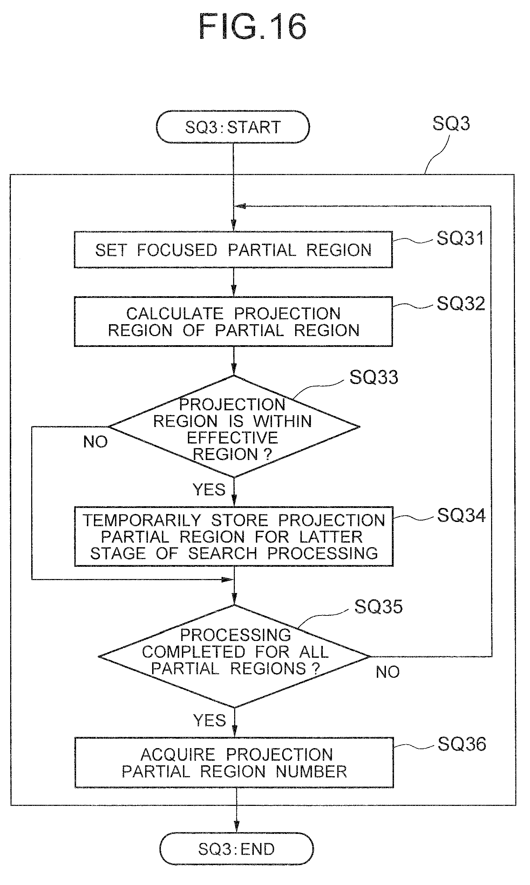

Then, in step SQ3, the projection partial region determining module 278 determines the projection partial region on the search image with respect to the registered image z. Hereinafter, explanations will be provided by referring to a flowchart of FIG. 16 which shows the operation of the step SQ3.

First, in step SQ31, the projection partial region determining module 278 sets one partial region where the projection partial region is not calculated.

Then, in step SQ32, the projection partial region determining module 278 calculates the projection partial region. The partial region is a rectangular region in this embodiment, so that the four corner coordinates of the rectangular region may be calculated. The way of calculation is described in the explanations of the functions of the projection partial region determining module 278.

Then, in step SQ33, the projection partial region determining module 278 judges whether or not the calculated projection partial region is an effective region on the search image. The effective region is a region of the search image where the pixel values exist, for example. In this embodiment, the partial region is the rectangular region. Thus, the four corner coordinates of the rectangular region may simply need to exist on the search image. The way of calculation is described in the explanations of the functions of the projection partial region determining module 278. The processing of step SQ34 is performed when all the four corner coordinates exist within the effective region, and the processing of SQ35 is performed if not.

Then, in step SQ34, the projection partial region determining module 278 temporarily stores the projection partial region existing in the effective region. This is for using it for the processing of a latter stage of the search processing. At this time, it is preferable to also store the information which can uniquely discriminate the partial region that is the basis for calculating the projection partial region.

Then, in step SQ35, the projection partial region determining module 278 judges whether or not the calculation of the projection partial regions for all the partial images has been completed. When judged as YES, the projection partial region determining module 278 performs the processing of step SQ36. When judged as NO, the projection partial region determining module 278 performs the processing of step SQ31. At last, in the step SQ36, the projection partial region determining module 278 calculates the number of projection partial regions existing within the effective region. Then, the result thereof is stored temporarily for the processing of a latter stage of the search processing.

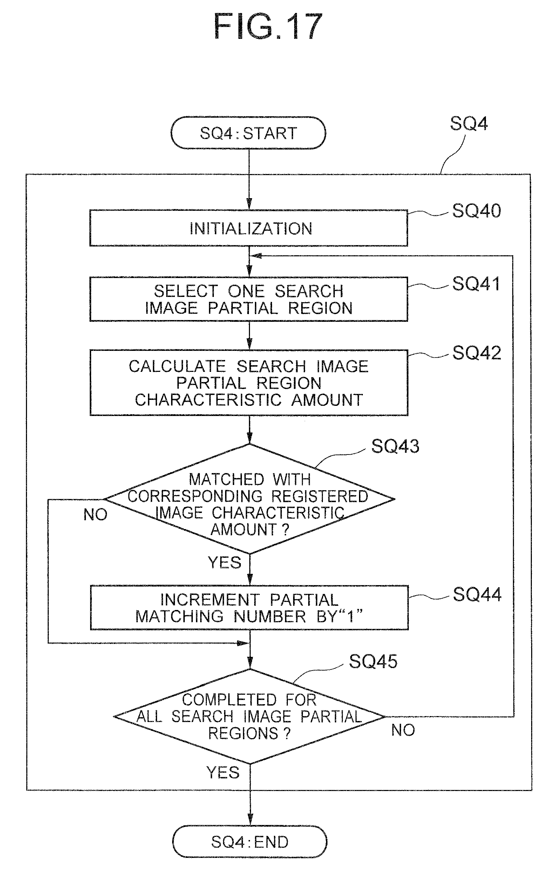

Then, in step SQ4, the search image partial region characteristic amount is acquired, and matching thereof with respect to the corresponding registered image part characteristic amount is executed. Hereinafter, explanations will be provided by referring to a flowchart of FIG. 17 which shows the operation of the step SQ4.

First, the projection image partial region characteristic amount calculating module 280 initializes the variable storing the partial region matching number between the registered image z and the search image to "0" (step SQ40). Then, the projection image partial region characteristic amount calculating module 280 selects one of the search image partial regions on which the partial region matching judgment processing in step SQ43 to be described later is not performed as a focused search image partial region (step SQ41). Thereafter, the projection image partial region characteristic amount calculating module 280 calculates the search image partial region characteristic amount regarding one of the focused search image partial regions (step SQ42). As described in the explanations of the functions of the projection image partial region characteristic amount calculating module 280, regarding the general search image partial region, after projecting the image of the search image partial region on the registered image, the characteristic amount regarding that image is acquired. However, in this embodiment, the existing ratio of the black pixels within the partial region is taken as the characteristic amount, so that it is sufficient to acquire the characteristic amount regarding the search image partial region on the search image.

Then, the partial region matching module 282 performs matching of the registered image partial region characteristic amount calculated from the registered image partial region corresponding to the focused search image partial region and the search image part characteristic amount (step SQ43). In this embodiment, it is judged as matched when the value acquired by subtracting the value of the search image partial region from the value of the registered image partial region characteristic amount is within a range set in advance. The range set in advance is normally a set of values including "0" and values relatively close to "0". The processing of step SQ44 is performed when judged as matched, and the processing of step SQ45 is performed when judged as unmatched.

In the step SQ44, the partial region matching module 282 increments the variable storing the partial region matching number between the registered image z and the search image by "1". Then, in step SQ45, the partial region matching module 282 judges whether or not the matching judgment of the partial region with respect to all the search image partial regions (step SQ43) has been completed. The processing is ended when judged as YES, and the processing of the step SQ41 is executed when judged as NO.

[0105] As a result of the processing of the steps SQ1, SQ2, SQ3, and SQ4 described above, the partial region matching number between the registered images z and the search image (the number of times judged that the partial region is matched) can be calculated.

In step SQ5, the partial region matching module 282 judges whether or not the partial region matching number is calculated for all the registered images. When judged as YES, the processing of SQ6 is executed. When judged as NO, the processing of SQ1 is executed.

As a result of the processing of the steps SQ1, SQ2, SQ3, SQ4, and SQ5 described above, the partial region matching number between all the registered images and the search image can be calculated.

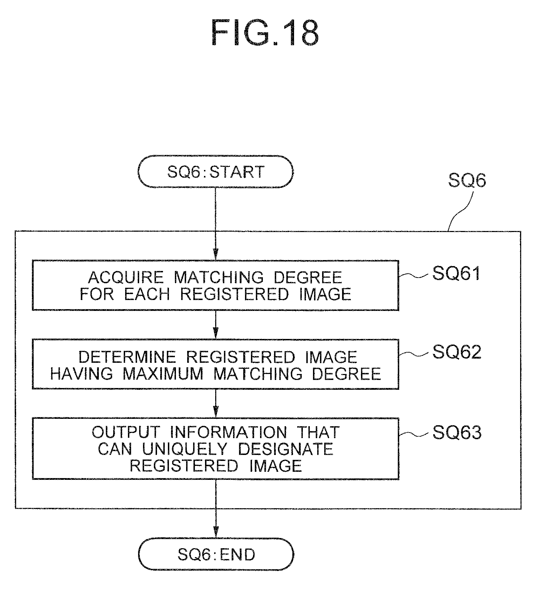

Then, in step SQ6, the image matching result calculating module 290 identifies the final registered image which corresponds to the search image supplied at last. Hereinafter, explanations will be provided by referring to a flowchart of FIG. 18 which shows the operation of the step SQ6.

First, in step SQ61, the image matching result calculating module 290 calculates the matching degree that is a scale for measuring the consistency between each of the registered images and the search image. In this embodiment, the matching degree is a value acquired by dividing the partial region matching number with respect to each registered image (calculated in the step SQ36) with the projection partial region number (effective region number) existing in the effective region. However, the matching degree is not limited only to that.

Then, in step SQ62, the image matching result calculating module 290 determines the registered image that is outputted as the registered image corresponding to the search image. This is the registered image from which the maximum matching degree is calculated. In a case where there are two or more registered images having the maximum matching degree, all of those registered images may be outputted. In that case, it is preferable to output the matching degree or a numerical value showing the degree of correspondence between the registered image and the search image calculated by using the matching degree along with the registered images. In this embodiment, the result is discarded in such case (such case means that the registered image corresponding to the search image is not detected).

Then, in step SQ63, the image matching result calculating module 290 outputs the information which uniquely designates the registered image. In this embodiment, the information outputted as a result is either the information which uniquely designates the search image or information indicating that the registered image corresponding to the search image cannot be detected. In a case where a plurality of pieces of information which uniquely designate the registered image are outputted in the step SQ62, there may be a plurality of pieces of information which uniquely designate the registered image outputted in the step SQ63. In a case where the matching degree or the numerical value showing the degree of correspondence between the registered image and the search image calculated by using the matching degree is also outputted in the step SQ62, the numerical value may also be outputted in the step SQ63. In that case, the information (information which can uniquely discriminates the registered image, the matching degree corresponding to the registered image, or the numerical value showing the degree of the correspondence) can be presented to the user of the image matching device of the embodiment (including references from other computers). This makes it possible for the user to perform image searching which is fitted to the object of the user by utilizing the image matching device of the present invention.

Note that the explanations above are provided while assuming that there is one affine parameter used for projection in the step SQ23. However, in a case where a single affine parameter cannot necessarily be determined, it is possible to determine the registered image to be outputted at last in the step SQ62 through calculating a plurality of affine parameter candidates in advance and individually performing calculations of each of the steps SQ3, SQ4, SQ5, and SQ61 for each of the affine parameters. For example, in a case where there are two registered images, the matching degree regarding a first affine parameter of a first registered image, the matching degree regarding a second affine parameter of the first registered image, and the matching degree of a second registered image may be used when two affine parameters are calculated from the first registered image and a single affine parameter is calculated from the second registered image. For example, the registered image from which the maximum matching degree out of those three kinds of matching degrees is calculated may be determined as the registered image to be outputted at last.

Next, effects of the embodiment will be described.

The characteristic amount is calculated by using the characteristic amount which characterizes the characteristic point arrangement from the geometric transformation invariant, the geometric transformation parameter is acquired with high accuracy by using only the matched characteristic point arrangement, the partial region of one of the images is projected on the other image by using the parameter, the characteristic amount is calculated from the acquired projection partial region, and matching is performed by utilizing the characteristic amount. Therefore, it is possible to perform matching with high accuracy even in a case where the characteristic point arrangements are similar but the original local region images from which the characteristic points are extracted are not similar.

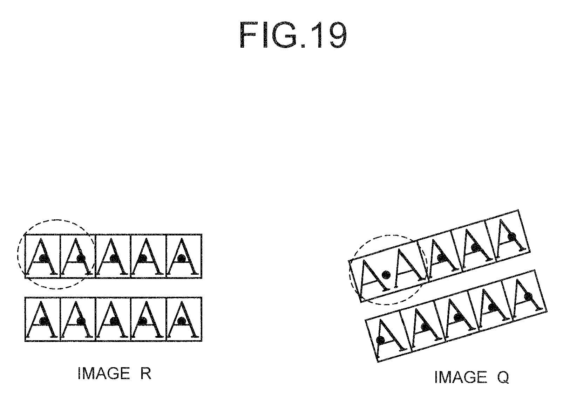

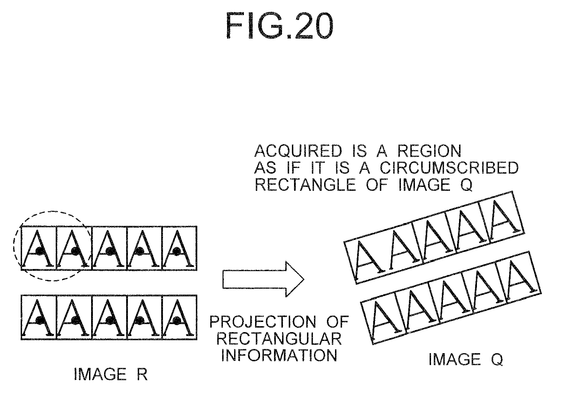

In addition, a following effect can also be achieved. In a case where an image is identified by utilizing the number of correct correspondences between the characteristic vectors as disclosed in Patent Document 1 and Patent Document 2, it may become difficult in some cases to identify the image with high accuracy since the number of correspondences becomes small if a connected region is wrongfully acquired accidentally due to an influence of a noise or the like even when the registered image and the search image are similar. FIG. 19 shows an example thereof. In FIG. 20, an image R is a registered image, and an image Q is a search image. In such case, there is a possibility of being able to detect the corresponding characteristic point arrangement on the right side of the image. However, it is theoretically impossible to detect the corresponding characteristic point arrangement on the left side, since the manner the characteristic point appears is different. Even in such case, if there is the characteristic point arrangement of a correct correspondence, for example, the projection region image almost matches (see FIG. 20) on assumption that transformation between the registered image and the search image (regarding the coordinates of the image) has a specific affine parameter or can be in approximation thereof. As a result, it is possible to perform matching of the images with high accuracy.

(SECOND EMBODIMENT)

Next, an embodiment of the present invention will be described in details by referring to the drawings. The structure of the second embodiment of the present invention is almost identical to the structure of the second embodiment, so that explanations thereof are omitted.

Next, the operations of this embodiment will be described. The registering processing is identical to that of the first embodiment, so that explanations thereof are omitted. Regarding the search processing, only different aspects will be described.

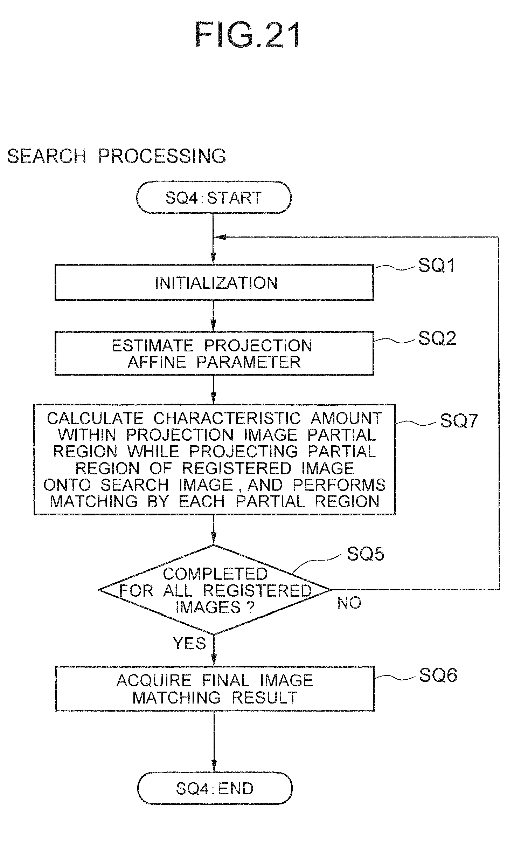

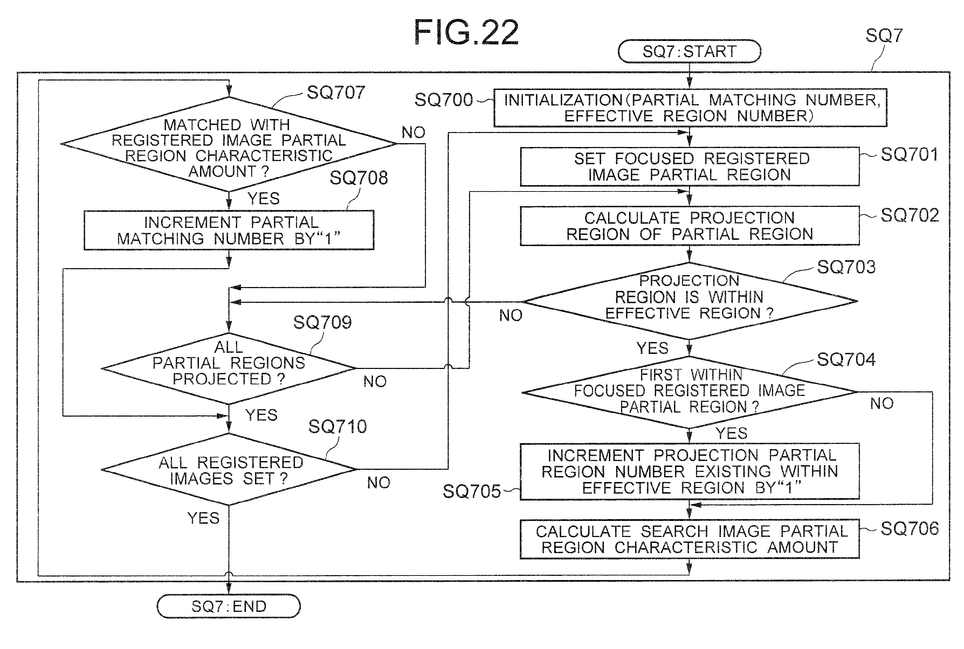

Referring to FIG. 21, operations corresponding to the step SQ3 and the step SQ4 in the first embodiment are replaced with step SQ7. The details of the step SQ7 of the second embodiment will be described by referring to FIG. 22.

First, the image matching result calculating module 290 initializes the partial region matching number and the effective region number. Specifically, "0" is substituted thereto (step SQ700). Then, in step SQ701, the projection partial region determining module 278 sets one partial region where the projection partial region is not calculated.

Then, in step SQ702, the projection partial region determining module 278 calculates the projection partial region. The difference with respect to the step SQ32 is that the projection partial region determining module 278 calculates the result of fluctuation of the projection partial region calculated by the projection partial region determining module 278 within a range that is set in advance to take it as a partial region candidate. Regarding the fluctuation, a plurality of variable candidates for each of the parameters a, b, c, d, e, and f are prepared, for example, and one of the combinations thereof is taken as the variable for each parameter. At this time, regarding the partial region, the processing is to be performed for one of the combinations of the variables on which the processing has not been performed yet. Through this, the processing can be repeatedly executed by an associative operation with step SQ709 to be described later until it becomes judged as YES in step SQ707 to be described later or until the processing is completed for all the variable combinations regarding one or more combinations of the plurality of variable candidates regarding each parameter. In this embodiment, slight fluctuations of e and f are to be considered. For example, it is defined that the candidates of the values of e are et1, et2, ---, ete, and the candidates of the values of f are ft1, ft2, ---, ftf. Provided that the variable for e is ete and the variable for f is ftf, the projection partial region is translated by ete in xq direction and by ftf in yq direction. In the case where the partial region is a rectangular region, it is sufficient to perform this operation for the four corner coordinates of the rectangular region.

Then, in step SQ703, the projection partial region determining module 278 judges whether or not the partial region candidate calculated by the projection partial region determining module 278 is an effective region on the search image. The way thereof is described in the explanations of the functions of the projection partial region determining module 278. The processing of step SQ704 is performed when all of the four corner coordinates exist within the effective region, and the processing of step SQ709 is performed if not.

Then, in step SQ704, the projection partial region determining module 278 judges whether or not the processing of the step SQ704 is performed for the first time regarding the partial region that is set currently. This is judgment processing for guaranteeing that the maximum value of the increase in the effective region number regarding each of the partial regions is "1" even when the repeated operation by associating action of the step SQ703 and the step SQ709 are executed (even when the partial region candidate is calculated for a plurality of times). The processing of step SQ705 is performed when judged as YES, and the processing of step SQ706 is performed when judged as NO.

**[0122]** In the step SQ705, the projection partial region determining module 278 increments the effective region number by "1".

Then, in step SQ706, the projection image partial region characteristic amount calculating module 280 calculates the characteristic amount (this will be called as a search image partial region candidate characteristic amount) regarding the partial region candidate on the search image to be calculated by the same processing as that of the step SQ42. While it is described in the explanations of the functions of the projection image partial region characteristic amount calculating module 280 that the projection image partial region characteristic amount calculating module 280 calculates the search image partial region characteristic amount from the search image partial region, it is evident that the characteristic amount regarding the search image partial region candidate can be calculated by using that function.

Then, in step SQ707, the projection image partial region characteristic amount calculating module 280 matches the registered image partial region characteristic amount calculated from the registered image partial region corresponding to the focused search image partial region candidate and the search image partial region candidate characteristic amount as in the step SQ43. The processing of step SQ708 is performed when judged as matched, and the processing of step SQ709 is performed when judged as unmatched.

In the step SQ708, the projection image partial region characteristic amount calculating module 280 increments the variable storing the partial region matching number between the registered image z and the search image by "1".

In the step SQ709, it is judged whether or not the processing has been completed for all the combinations of the variable candidates described in the explanation of the step SQ702. The processing of step SQ710 is performed when judged as YES, and the processing of the step SQ702 is performed when judged as NO.

**[0127]** In the step SQ710, the projection image partial region characteristic amount calculating module 280 judges whether or not the partial region matching judgment has been completed for all the registered image partial regions. The processing is ended when judged as YES, and the processing of step S701 is performed when judged as NO.

**[0128]** Next, effects of the second embodiment of the present invention will be described.
The second embodiment of the present invention is structured to calculate the projection partial region in the step SQ702.

The difference with respect to the first embodiment is that the second embodiment is structured to calculate the result of making fluctuation with respect to the projection partial region calculated by the projection partial region determining module 278 within the range set in advance and to take it as the final projection partial region.

Thereby, the projected region image can be matched with still higher accuracy compared to the case of the first embodiment even in a case where presupposition or approximation with respect to the affine parameter does not apply regarding the transformation between the registered image and the search image (regarding the coordinates of the image), that is, where the unignorable transformation is generated locally. Therefore, matching with still higher accuracy can be achieved.

Next, a first modification example of the second embodiment will be described in details by referring to the drawings. The structure of the first modification example is identical to that of the first embodiment in terms of the registering processing, so that explanations thereof are omitted.

Then, the operations of this embodiment will be described. The registering processing is identical to that of the first embodiment, so that explanations thereof are omitted. Only the different aspects from the case of the first embodiment regarding the search processing will be described.

The different operations are of each of the steps SQ23, SQ3, and SQ4 of the first embodiment. Steps executing the processing corresponding to those steps in the modification example of the second embodiment are steps SQA23, SQA3, and SQA4, respectively.

The processing of the step SQA23 is an expansion of the method which utilizes a plurality of affine parameter candidates in a case where a single affine parameter cannot necessarily be determined, which is described in paragraph [0111] depicted above. That is, in the processing of the step SQ23, (in many cases, a single) vote number storage region where the maximum vote number is stored is detected and the value of the parameter stored in the parameter value storage region corresponding to the vote number storage region is determined as the vote affine parameter. In the meantime, in the processing of the step SAQ23, (in many cases, a plurality of) vote number storage regions satisfying conditions set in advance are detected and the parameter values stored in the parameter value storage regions corresponding to those vote number storage regions are determined as the projection affine parameters.

The conditions set in advance may be following conditions, for example.

(1) The vote number regarding the vote number storage region is a value set in advance or larger.

(2) The vote number regarding the vote number storage region is a number acquired by subtracting a value set in advance from the maximum vote number or larger.

(3) Regarding the vote number of the vote number storage region, a value of the ratio acquired by dividing the vote number with the maximum vote number is a value set in advance or larger. Two of those conditions may also be combined.

The processing of the step SAQ3 is processing executed by the projection partial region determining module 278 to determine the projection partial region on the search image with respect to the registered image z, when (in many cases, a plurality of) projection affine parameters calculated in the step SQA23 are used. This is the processing corresponding to the step SQ3 of the first embodiment.

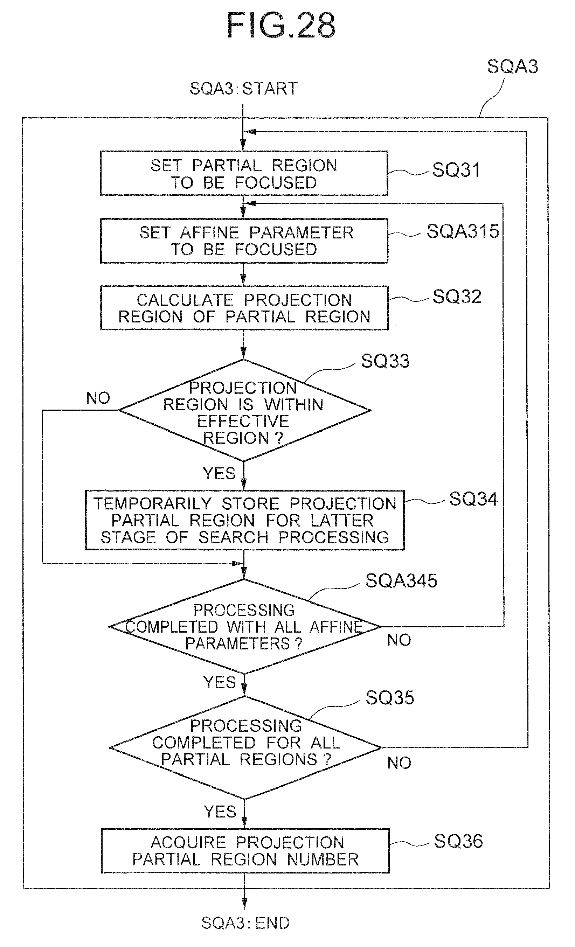

FIG. 28 is a flowchart for describing the step SQA3 of the first modification example of the second embodiment. Hereinafter, the processing of the step SQA3 will be described by referring to FIG. 28. Compared to the processing of the step SQ3, the processing of the step SQA3 is identical to the processing of the step SQ3 except for the fact that the processing of step SQA315 as well as SQA345 is also performed.

In step SQA315, the projection partial region determining module 228 acquires a single affine parameter from which the projection partial region for the focused partial region is not calculated from the projection affine parameters regarding the vote number storage region detected in the step SQA23.

In step SQA345, regarding the focused partial region, the partial region matching module 282 judges whether or not calculation of the projection partial region for all the vote number storage regions detected in the step SQA23 has been completed. The processing of step SQ5 is performed when judged as YES, and the processing of step SQA15 is performed when judged as NO.

[0137] Regarding the projection partial region to be calculated, it is preferable in step SQ34 of the first modification example of the second embodiment to also store the partial region (of the registered image) and the information which uniquely identifies the affine parameter used for the projection as the basis for calculating the projection partial region.

The processing of the step SQA4 is processing which acquires the search image partial region and performs matching with respect to the corresponding registered image part characteristic amount by using the projection partial region calculated in the step SQA3.

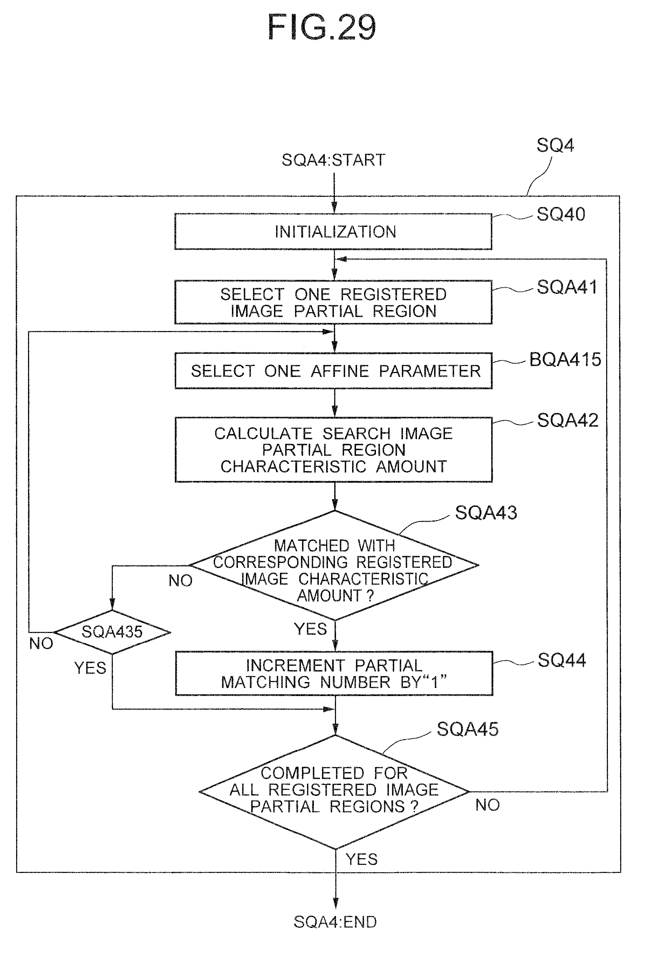

FIG. 29 is a flowchart for describing the processing of the step SQA4 of the first modification example of the second embodiment. Hereinafter, the processing of the step SQA4 will be described by referring to FIG. 29. Processing of step SQ40, step SQ43, and step SQ44 is identical to the processing of the step SQ4. Hereinafter, only processing of

# EP 2 387 003 A1

steps SQA41, SQA42, SQA43, SQA435, and SQA45 different from the processing of the step SQ4 will be described.

In the step SQ41, the projection image partial region characteristic amount calculating module 280 selects a single registered image partial region from the registered image partial regions that have not been treated as the matching target.

In step SQA415, the projection image partial region characteristic amount calculating module 280 selects a single affine parameter that has not been treated as the matching target regarding the focused registered image partial region.

In the step SQA42, the projection image partial region characteristic amount calculating module 280 calculates the search image partial region characteristic amount by referring to the search image partial region already calculated in the step SQA3 regarding the focused registered image partial region and the affine parameter. The calculation method thereof is identical to the calculation method used for performing the processing of the step SQ42.

The processing of the step SQA43 is the same processing as the processing of the step SQ43 except that the processing of step SQA435 is performed when the judgment result is NO.

**[0144]** In the step SQA435, the projection image partial region characteristic amount calculating module 280 judges whether or not all the search image partial regions using the affine parameter have been calculated regarding the focused registered image partial region. The processing of the step SQA45 is performed when judged as YES, and the processing of the step SQA415 is performed when judged as NO.

**[0145]** In the step SQA45, the projection image partial region characteristic amount calculating module 280 judges whether or not the processing for all the registered image partial regions has been completed. The processing of the step SQ4 is ended when judged as YES, and the processing of the step SQ41 is performed when judged as NO.

**[0146]** In the above, the operation for acquiring the affine parameter candidates using a plurality of variable candidates described in the paragraph [118] in the explanations of the second embodiment is not executed. However, it is to be noted that such processing can easily be added to the first modification example of the second embodiment.

Further, information indicating the affine parameter calculated from which characteristic point arrangement is voted to which vote number storage region is not used in the case described above. With the use of such information, it is unnecessary to use the affine parameters regarding all the vote number storage regions detected by the processing of the step SQA23. For example, in a case where a given partial region of the registered image is focused, the characteristic point corresponding to that partial region may be acquired and only the affine parameter whose characteristic point satisfies a following condition may be used.

(Condition 1)

Affine parameter corresponding to the vote number storage region whose vote number is incremented by "1" or more by the individual affine parameter acquired from the characteristic point arrangement including the characteristic point.

This makes it possible to achieve matching of a still higher speed.

Next, effects of the first modification example of the second embodiment will be described. The first modification example of the second embodiment executes the processing which acquires individual search image partial regions by respectively utilizing a plurality of affine parameters (in many cases) for a given registered image partial region, and increments the partial matching number by "1" on condition that at least one of the search image partial regions calculated from those search image partial regions match with the registered image partial region characteristic amount.

This makes it possible to perform matching of the projected region image with still higher accuracy compared to the first embodiment even when the transformation between the registered image and the search image does not have a specific parameter (regarding the coordinates of the image) or cannot be in approximation thereof. Therefore, matching of still higher accuracy can be achieved.

Further, for example, when there is generated a transformation in which the affine parameter has locally different values and the variations are great, it is necessary according to the second embodiment to set a large fluctuation width. In that case, it is necessary to consider the possibility of all the fluctuations in a round-robin manner, so that it takes time to execute a series of processing. In the first modification example of the second embodiment, a plurality of affine parameters (of values varying by a certain value in accordance with the width of the section) corresponding to each vote box can be used instead of taking such consideration of the round-robin manner. At least one of the plurality of affine parameters can be expected to be an affine parameter of locally fine accuracy. Therefore, matching of fine accuracy in the same level as that of the second embodiment can be achieved at a high speed.

Next, a second modification example of the second embodiment will be described. In the second modification example of the second embodiment, considered is a case where one section is necessarily allotted for each of different affine parameters by setting the sections as small as possible as in the first embodiment or the first modification example of the second embodiment as described in the paragraph [0078].

When the first modification example of the second embodiment is utilized, the number of the vote number

24

storage regions becomes relatively large. Thus, in a case where the number of acquired different individual affine parameters is relatively small, the required storage capacity may be suppressed small in some cases by storing the affine parameter candidates used for projecting the partial region corresponding to each of the characteristic points than preparing the vote number storage regions in advance.

The second modification example of the second embodiment is an embodiment proposed based on such idea. Since the number of different affine parameters becomes tremendous, it is expected to take long time for performing matching. However, for overcoming such issue, the method used when describing the first modification example of the second embodiment, i.e., the method using only the affine parameter voted for a given section, is to be used in combination. In a case where necessarily one section is allotted to each different affine parameter, (Condition 1) described above can be rewritten as follows.

(Condition 2)

Individual affine parameter acquired from the characteristic point arrangement including the characteristic points.

Next, the second modification example of the second embodiment of the present invention will be described in details. First, the structure of the second modification example of the second embodiment of the present invention will be described. FIG. 30 is a block diagram showing the structure of the second modification example of the second embodiment of the present invention.

Referring to FIG. 30, the structure of the second modification example of the second embodiment is identical to that of the first embodiment except for a part thereof. Therefore, only the different points will be described.

In FIG. 30, an individual affine parameter module 446 stores the individual affine parameters a, b, c, d, e, and f verified by the individual affine parameter verifying module 236 along with the information which can uniquely specifies the characteristic points in the registered image used when calculating those individual affine parameters a, b, c, d, e, and f. The individual affine parameter module 446 may store each of the individual affine parameters a, b, c, d, e, and f calculated from the characteristic point arrangement (cp1, cp2, cp3, cp4, cp5, cp6) in the registered image, for example, as the individual affine parameter regarding the characteristic point cp1, as the individual affine parameter regarding the characteristic point cp2, and also as the individual affine parameters regarding the characteristic points from cp3 to cp6. Details of the operations will be described later when describing the operations of the latter stages.

In FIG. 30, regarding the focused characteristic point of the focused registered image, a projection affine parameter determining module 460 outputs a set of the individual affine parameters a, b, c, d, e, and f. Details of the operations will be described later when describing the operations of the latter stages.

Next, operations of the second modification example of the second embodiment of the present invention will be described. The registering processing is identical to that of the first embodiment, so that explanations thereof are omitted. Regarding the search processing, only different points with respect to the first embodiment will be described.

The different operations are of each processing of the steps SQ2, SQ22, SQA3, and SQA4 of the second embodiment. In the first modification example of the second embodiment, the processing corresponding to those steps are defined to be the processing of steps SQB2, SQB22, SQB3, and SQB4, respectively.

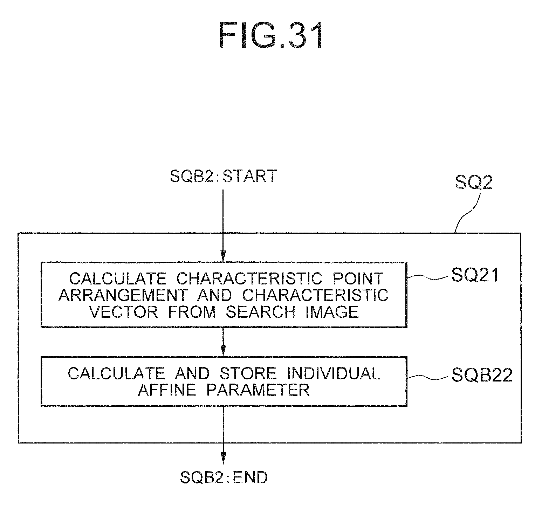

FIG. 31 is a flowchart showing the operation of the step SQB2 of the second modification example of the second embodiment. Referring to FIG. 31, the processing of the step SQB2 is constituted with processing of step SQ21 and processing of step SQB22. The processing corresponding to the step SQA23 is eliminated from the processing of the step SQB2.

The step SQ21 is the same processing as that of the first modification example of the second embodiment.

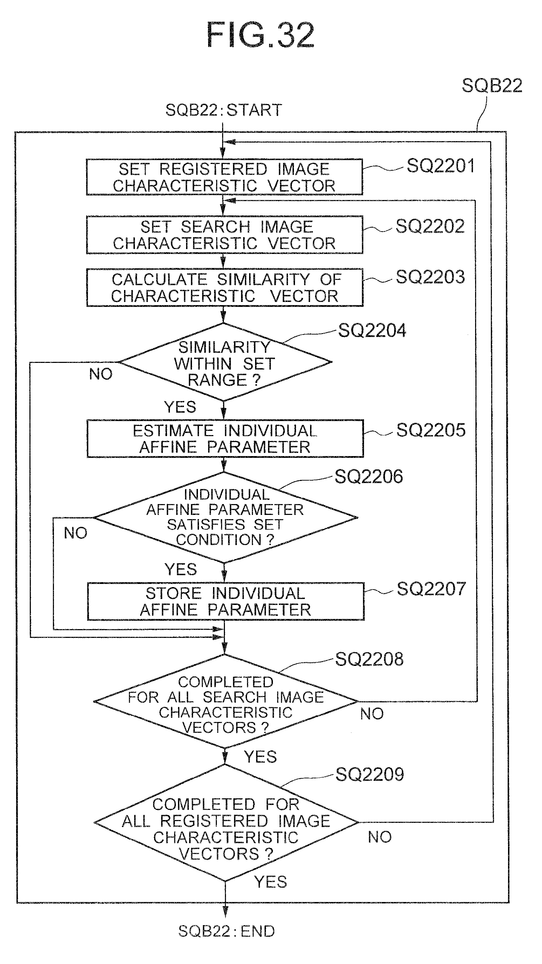

Then, the processing of the step SQB22 will be described. FIG. 32 is a flowchart showing the processing of the step SQB22 of the second modification example of the second embodiment. Hereinafter, explanations will be provided by referring to FIG. 32. Explanations of the steps which execute the same processing as the case of the first embodiment are omitted, and only each processing of the steps SQB2207 and SQB2209 as the different steps is to be described.

The processing of the step SQB2207 is the processing executed by the individual affine parameter storage module 446 to store the individual affine parameters verified in the step SQ2206. The method used by the individual affine parameter storage module 446 for storing is described in the structure of the individual affine parameter storage module 446.

Regarding the processing of the step SQB2209, contents thereof are the same except that the core module of the processing of the step SQ2209 changes from the parameter space vote number storage module 246 to the individual affine parameter storage module 446.

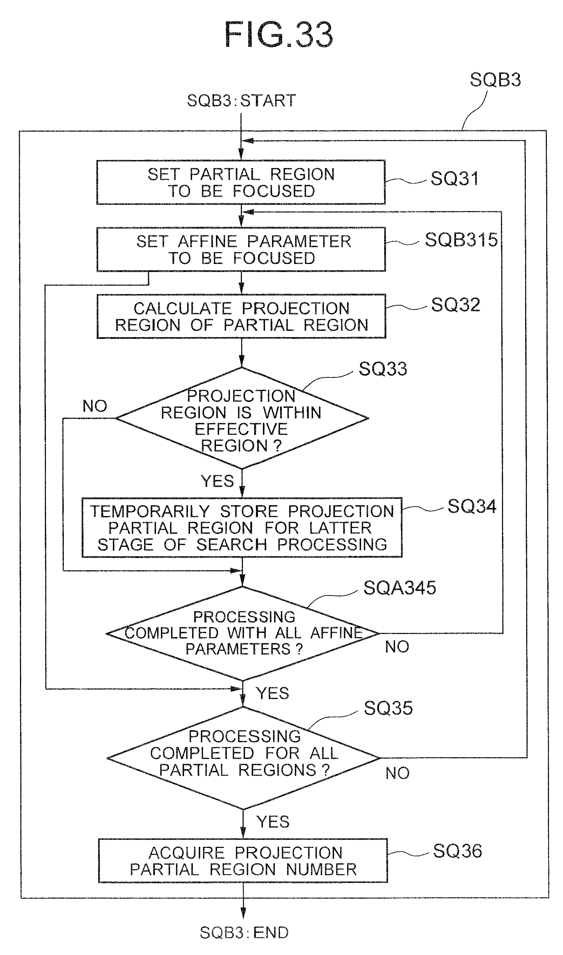

Next, the processing of the step SQB3 will be described by referring to FIG. 33 which is a flowchart for describing the processing of the step SQB3. The difference of the processing of the step SQB3 with respect to the processing of the step SQA3 of the first modification example of the second embodiment is that the processing of the step SQA315 is replaced with processing of step SQB315.

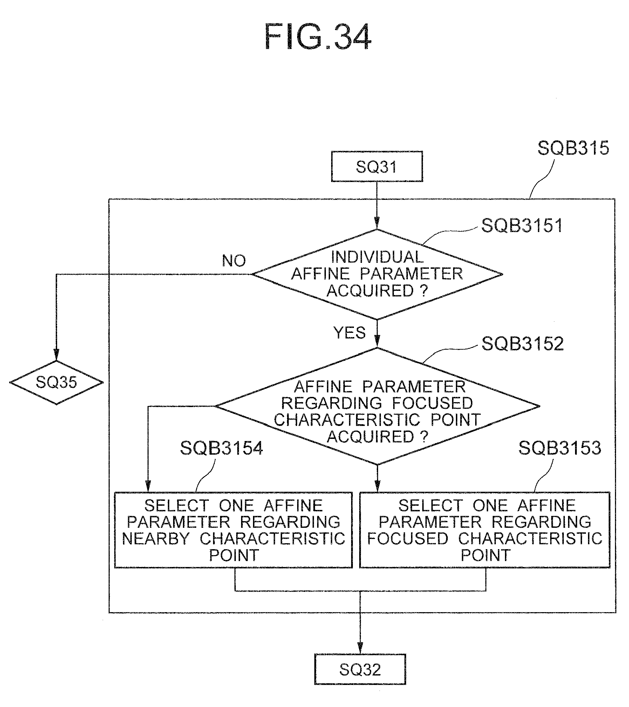

Next, the processing of the step SQB315 will be described by referring to FIG. 34 which is a flowchart for describing the processing of the step SQB315. The processing of the step SQB315 is processing executed by the projection affine parameter determining module 460 for outputting a set of the individual affine parameters a, b, c, d, e, and f which have not been outputted yet regarding the focused characteristic point of the focused registered image. An example of the details of the processing will be described.

First, regarding the focused registered image, the projection affine parameter determining module 460 judges whether or not one or more individual affine parameters are acquired (step SQB3151). When judged as NO, the processing of the step SQ35 is performed.

When judged as YES, the projection affine parameter determining module 460 judges whether or not the individual affine parameter is registered regarding the focused characteristic point of the focused registered image (step SQB3152).

When judged as YES, the projection affine parameter determining module 460 selects one set of the individual affine parameters that have not been outputted yet from the stored individual affine parameters regarding the focused characteristic points of the focused registered image (step SQB3153), and performs the processing of the step SQ32.

When judged as NO, the projection affine parameter determining module 460 selects one set of the individual affine parameters that have not been outputted yet from the individual affine parameters stored regarding the nearby characteristic points (step SQB3154), and performs the processing of the step SQ32. The processing of the step SQB3154 selects one set of the individual affine parameters which have not been outputted yet regarding the characteristic points existing in the nearest position on the image from the characteristic point focused currently out of the characteristic points of the focused registered image, for example.

The information of those individual affine parameters is utilized by the projection partial region determining module 278 in the processing of latter stages.

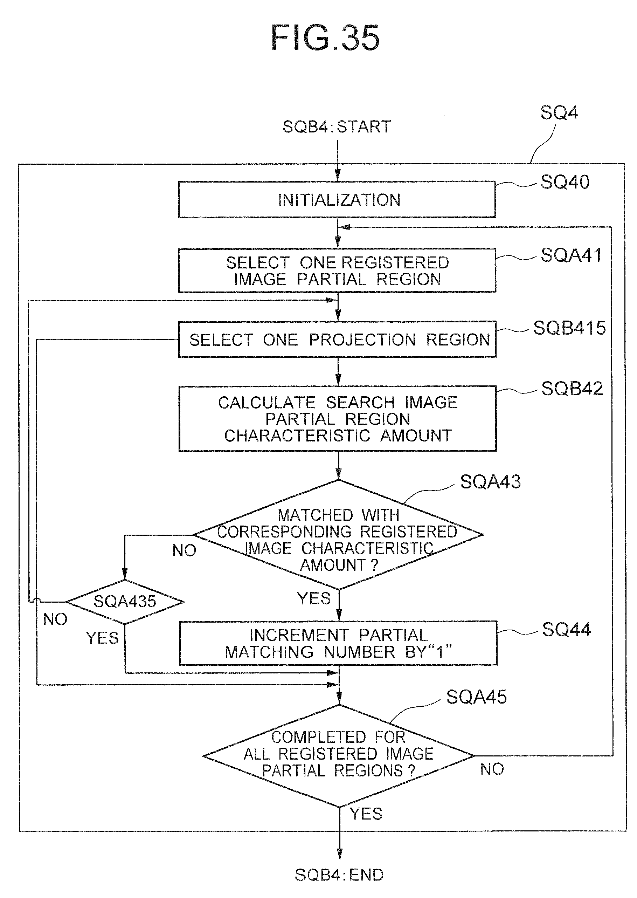

Next, the processing of the step SQB4 will be described by referring to FIG. 35 which is a flowchart showing the processing of the step SQB4. The difference of the processing of the step SQB4 with respect to the processing of the step SQA4 of the first modification example of the second embodiment is that the processing of the step SQA415 is replaced with processing of step SQB415.

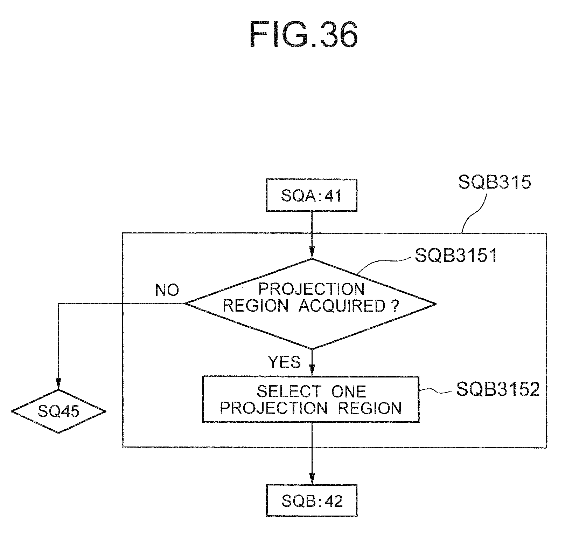

Next, the processing of the step SQB415 will be described by referring to FIG. 36 which is a flowchart showing the processing of the step SQB415. In the step SQB415, it is first judged whether or not the projection region is calculated regarding the focused characteristic point of the focused registered image (step SQB4151).

When judged as YES, one projection partial region that has not been selected among the stored projection partial regions is selected regarding the focused characteristic point of the focused registered image (step SQB4152), and the processing of SQB42 is performed. When judged as NO, the processing of the step SQA45 is performed.

Next, effects of the second modification example of the second embodiment of the present invention will be described. The second modification example of the second embodiment is a method which performs calculation of the search image partial region by utilizing all the calculated individual affine parameters. Since the affine parameter in the vicinity of the characteristic point as the basis for calculating the individual affine parameters is particularly a highly accurate affine parameter, the second modification is capable of achieving matching of higher accuracy than the first modification of the second embodiment which uses the affine parameter calculated from the individual affine parameters corresponding to the same vote number storage region.

Further, unlike the case of the first modification example of the second embodiment, it is unnecessary to prepare the vote number storage regions of a vast capacitance. Thus, it may be possible to perform matching with a low storage capacitance. In the second modification example of the second embodiment, for the sake of explanations, there is assumed a case where necessarily one section is allotted to each of the different affine parameters through making the sections as small as possible. However, it is to be noted that the conditions to which the second modification example of the second embodiment is effective are not necessarily limited only to such case.

(THIRD EMBODIMENT)

Next, a third embodiment of the present invention will be described in details by referring to the drawings.

The third embodiment of the present invention is a partially replaced form of the first embodiment, so that only the different points thereof will be described.
FIG. 23 is an illustration for describing the structure of the third embodiment of the present invention. First, the different point between the structure of the third embodiment of the present invention and the structure of the first embodiment is that the image matching result calculating module 290 is structured to calculate not only the matching degree but also the unmatching degree that is a scale regarding inconsistency and to identify the registered image corresponding to the search image at last. This module is defined as an image matching result calculating module 390.

The unmatching degree is a following value, for example.
First, "(partial region number - effective region number) ÷ partial region number" which is calculated for each of the registered images z is taken as the scale for the unmatching degree (unmatching degree 1).

Further, a following unmatching degree (unmatching degree 2) can also be considered. That is, after filling in the search image partial region as the basis for calculating the matched search image partial region characteristic amount with white pixels, the connected regions of the black pixels in the search image is acquired again, and the number of connected regions satisfying a specific condition (size of a specific value or more, the number of pixels, etc.) is taken as the unmatching degree.

Further, a following matching degree (matching degree 3) can also be considered. That is, the connected regions of the search image acquired as a result of operation of the search image characteristic point extracting module 222 can be utilized For example, the number (this value is defined as S) where the common region (called as both region hereinafter) between each of those connected regions and the search image partial region as the basis for calculating the search image partial region characteristic amount that matches with a given registered image partial region characteristic amount is an area or proportion of a specific value or more (e.g., (area of common region of both regions) ÷ (area of the sum region of both regions)) is calculated, and "S ÷ (connected region number of search image)" is taken as the unmatching degree.

Various methods can be considered for identifying the registered image at last by using the unmatching degree described herein and the matching degree. For example, the registered image to be outputted may be determined from the registered images satisfying the condition (e.g., the unmatching degree takes a specific value or smaller) regarding the unmatching degrees, for example, through the procedure described in the step SQ62.

Further, a function taking the matching degree and the unmatching degree as the variable, e.g., the value of linear sum, may also be utilized. For example, as a value of a correction matching degree, "(correction matching degree) = (matching degree) - ($\gamma$ * (matching degree 1) + $\delta$ * (unmatching degree 2) + $\eta$ * (unmatching degree 3)) may be considered. Through using this as a new matching degree, it is possible to determine the registered image to be outputted by the procedure of the conventional step SQ62. Note here that $\gamma$, $\delta$, and $\eta$ are normally positive values, and those are values set in advance.

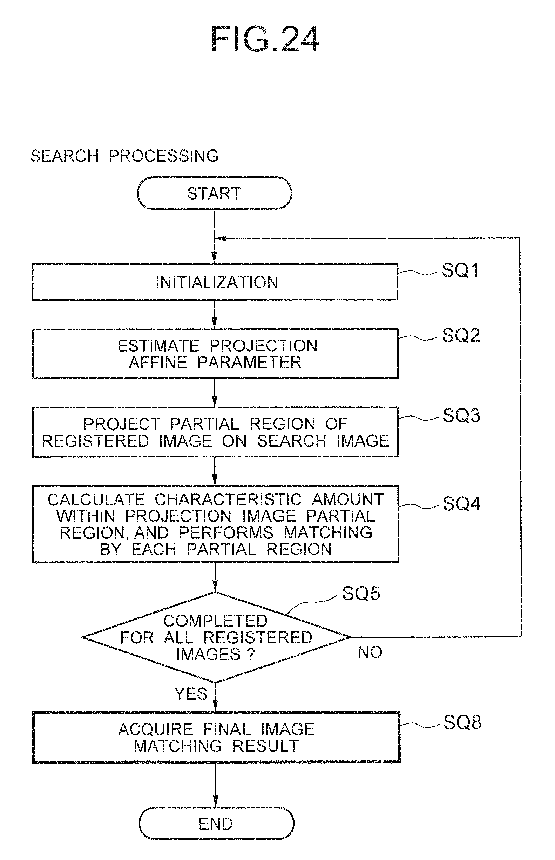

First, referring to FIG. 24 and FIG. 10, the difference between the operations of the third embodiment of the present invention and the operations of the first embodiment is that the processing of the step SQ6 is replaced with the step SQ8.

The operation thereof will be described by referring to FIG. 2 which shows the processing of the step SQ8. Explanations of step SQ81 are omitted, since the image matching result calculating module 390 performs the same processing as that of the step SQ63.

In step SQ82, the image matching result calculating module 390 calculates one or more of the above-described unmatching degrees after the matching degree calculation processing, and determines the registered image to be outputted as the registered image corresponding to the search image in the manner described above by using the matching degree and the unmatching degree. In step SQ83, the image matching result calculating module 390 performs the processing for outputting the information which can uniquely designate the registered image. The processing of this step is different with respect to the step SQ63 only in respect that this step can output the unmatching degree or the value calculated from the unmatching degree. Other that, the same processing as that of the step SQ63 may be executed.

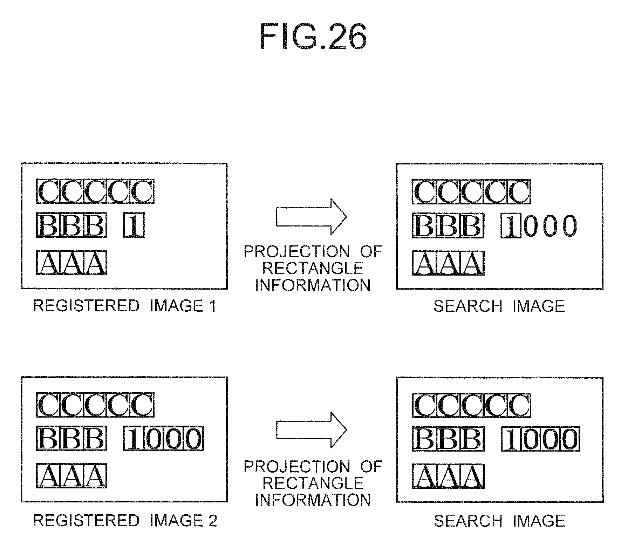

Next, effects of the third embodiment will be described. In the first embodiment of the present invention, the matching degree becomes high when the black pixel region of the registered image is a part of the black pixel region of the search image. Thus, matching regarding the white pixel region of the registered image may not be performed. FIG. 26 is an example where partial regions of two registered images are projected on a same search image (this may be comprehended as an example of address character string image, assuming that a city name is AAA, a street name is BBB, and a recipient is CCCCC). In this drawing, the rectangles on the left side of the image shows the registered image partial regions, and the rectangles on the right side show the search image partial regions (it is necessary to pay attentions to the fact that those are not the connected regions of the black pixels calculated from the search images). In the first embodiment of the present invention, the characteristic amounts are calculated respectively from the registered image partial region and the search image partial region that is the region where the registered image partial region is projected on the search image, and those are matched to calculate the matching degree. According to that, the registered image 1 and the registered image 2 of FIG. 26 both come to have the matching degree 1. However, the registered image 1 is originally an image that is different from the search image, so that it is not a desired result. Through adding the scales such as the unmatching degree 2 and unmatching degree 3, generation of such inconvenience can be reduced. Further, in a case where the partial matching between the registered image and the search image is not allowed due to a requirement in terms of application, it is expected to achieve the requirement with still higher accuracy through adding the scale such as the unmatching degree 1.

Each of the embodiments from the first to the fifth embodiments described above can be used for matching of images in general or matching of document images. Particularly, since each embodiment performs matching by using the information acquired from the connected regions, it is possible to identify and search with high accuracy even with images that are difficult to perform matching with the method of Patent Document 1 which performs matching by using the information acquired from the center of gravity of words, such as the character string image formed from the several rows of character strings (e.g., images of address character string (including recipient information) written on postal matters).

Further, each of the above-described embodiments from the first to fifth embodiments does not perform a procedure disclosed in Patent Document 2 for acquiring a new characteristic point (integrated characteristic point) by integrating the characteristic points for the sake of explanations. However, it is to be noted that such procedure can be easily added.

The structures and the operations of each of the above-described embodiments are merely presented as a way of examples, and either one or both of the structures and procedures of the operations can be rearranged within the scope of the principle of the present invention. For example, in the operations of the first embodiment, the loop regarding the registered image within the step SR21 and the loop regarding the registered image within the step SR22 can be easily integrated into one. In the embodiments described above, the cases where the present invention is built as hardware have been described. However, the present invention is not limited only to such case. As the embodiment of the present invention, the present invention may also be built as software. In a case where the present invention is built as software, a program according to the embodiments of the present invention is built as a structure which causes a computer to execute the functions of each module shown in FIG. 1 and FIG. 23.

Further, the computer program supplied within the device may be stored in a readable/writable memory or a storage device (storage medium) such as a hard disk device. In such case, the present invention can be constituted with such computer program codes or storage medium.

Further, the program according to the embodiments of the present invention may be built as a program which integrally controls the entire structures of FIG. 1 and FIG. 23. Further, the program according to the embodiments of the present invention may also be built as a program which controls individual modules of FIG. 1 and FIG 23 or as a program which controls the structure where some of those modules are integrated.

While the present invention has been described by referring to the embodiments (and examples), the present invention is not limited only to those embodiments (and examples) described above. Various kinds of modification that occur to those skilled in the art can be applied to the structures and details of the present invention within the scope of the present invention.

This Application claims the Priority right based on Japanese Patent Application No. 2008-288260 filed on November 10, 2008 as well as Japanese Patent Application No. 2009-103116 filed on April 21, 2009 the disclosure thereof is hereby incorporated by reference in its entirety.

INDUSTRIAL APPLICABILITY

The present invention can be applied to the computer industry and other information processing industries related thereto. More specifically, the present invention can be applied to usages such as searching or identifying general images and documents, particularly images of character strings such as addresses and the like written on postal matters.

REFERENCE NUMERALS

| 201 | Image matching module |
|---|---|
| 212 | Registered image characteristic point extracting module |
| 214 | Registered image characteristic point arrangement calculating module |
| 216 | Registered image invariant calculating module |
| 218a | Registered image characteristic point arrangement storage module |
| 218b | Registered image invariant storage module |
| 222 | Search image characteristic point storage module |
| 224 | Search image characteristic point arrangement calculating module |
| 226 | Search image invariant calculating module |
| 232 | Invariant matching judgment module |
| 234 | Individual affine parameter estimating module |
| 236 | Individual affine parameter verifying module |
| 246 | Parameter space vote number storage module |
| 250 | Projection affine parameter estimating module |
| 260, 460 | Projection affine parameter determining module |
| 262 | Partial region projecting module |
| 264 | Projection image matching module |
| 272 | Partial region calculating module |
| 274 | Partial region characteristic amount calculating module |

278        Projection partial region determining module
280        Projection image partial region characteristic amount calculating module
282        Partial region matching module
290, 390   Image matching result calculating module
446        Individual affine parameter storage module

**Claims**

1.  An image matching device for matching a first image and a second image, comprising:

    partial region calculating means for calculating one partial region or more from an image of the second image;
    partial region characteristic amount calculating means for calculating a characteristic amount regarding the partial region;
    characteristic point extracting means for calculating characteristic points of the images from each of the first image and the second image;
    characteristic point arrangement calculating means for calculating arrangements of the characteristic points from each of the images;
    invariant calculating means for calculating a characteristic amount that is a geometric transformation invariant or a characteristic vector having the geometric transformation invariant as an element from the arrangements of the characteristic points of each of the images;
    invariant matching judgment means for judging whether or not the characteristic amount or the characteristic vector calculated from the first image matches with the characteristic amount or the characteristic vector calculated from the second image;
    parameter estimating means for estimating a geometric transformation parameter between the first image and the second image;
    projection partial region determining means for calculating a partial region on the first image corresponding to a partial region on the second image by utilizing the geometric transformation parameter;
    projection image partial region characteristic amount calculating means for calculating a characteristic amount regarding the partial region on the first image corresponding to the partial region of the second image acquired by the projection partial region determining means; and
    partial region matching means for judging whether or not the characteristic amount calculated by the projection image partial region characteristic amount calculating means matches with the characteristic amount calculated by the partial region characteristic amount calculating means.

2.  The image matching device as claimed in claim 1, wherein:

    the geometric transformation parameter estimated by the parameter estimating means is a constant value regardless of positions on the image; and
    the projection partial region determining means utilizes the estimated geometric transformation parameter that takes a constant value regardless of the positions on the image.

3.  The image matching device as claimed in claim 1, wherein
    the projection partial region determining means calculates one partial region candidate or more in addition to the geometric transformation parameter by using a result of fluctuating the geometric transformation within a range given in advance, and judges that the partial region is matched when the partial region candidate calculated by using at least one result of fluctuation made within the range given in advance is judged as matched.

4.  The image matching device as claimed in claim 1, wherein:

    the partial region characteristic amount calculating means uses a second geometric transformation invariant as the characteristic amount in the partial region; and
    the projection image partial region characteristic amount calculating means uses the geometric transformation invariant in the partial region on the first image corresponding to the partial region on the second image.

5.  The image matching device as claimed in claim 1, wherein
    the characteristic point extracting means extracts a center of gravity of a connected region regarding an figure region of the image as the characteristic point.

**6.** The image matching device as claimed in claim 1, wherein
the partial region matching means calculates matching number between the partial region characteristic amount of the first image and the partial characteristic amount of the second image.

**7.** The image matching device as claimed in claim 1, wherein:

the parameter estimating means estimates one geometric transformation parameter or more; and
the projection partial region determining means utilizes one or more of the one or more estimated geometric transformation parameters.

**8.** The image matching device as claimed in claim 1, wherein:

the geometric transformation parameters estimated by the parameter estimating means are related to the characteristic points within the arrangement of the characteristic points of each of the images; and
the projection partial region determining means utilizes the geometric transformation parameters related to the characteristic points.

**9.** An image matching method for matching a first image and a second image, comprising:

processing which calculates one partial region or more from an image of the second image;
processing which calculates a characteristic amount regarding the partial region;
processing which calculates characteristic points of the images from each of the first image and the second image;
processing which calculates arrangements of the characteristic points from each of the images;
processing which calculates a characteristic amount that is a geometric transformation invariant or a characteristic vector having the geometric transformation invariant as an element from the arrangements of the characteristic points of each of the images;
processing which judges whether or not the characteristic amount or the characteristic vector calculated from the first image matches with the characteristic amount or the characteristic vector calculated from the second image;
processing which estimates a geometric transformation parameter between the first image and the second image;
processing which calculates a partial region on the first image corresponding to a partial region of the second image by utilizing the geometric transformation parameter;
processing which calculates a characteristic amount regarding of the partial region of the projection image on the first image corresponding to the acquired partial region of the second image; and
processing which judges whether or not the characteristic amount of the partial region of the projection image matches with the characteristic amount of the partial region.

**10.** The image matching method as claimed in claim 9, wherein:

the estimated geometric transformation parameter is a constant value regardless of positions on the image; and
the estimated geometric transformation parameter that takes a constant value regardless of the positions on the image is used.

**11.** The image matching method as claimed in claim 9, comprising:

calculating one partial region candidate or more in addition to the geometric transformation parameter by using one parameter value or more given in advance regarding the geometric transformation, and judging that the partial region is matched when the partial region candidate calculated by using at least one of the parameter values given in advance.

**12.** The image matching method as claimed in claim 9, wherein:

a second geometric transformation invariant is used as the characteristic amount in the partial region; and
the geometric transformation invariant is used as the characteristic amount in the partial region on the first image corresponding to the partial region on the second image.

**13.** The image matching method as claimed in claim 9, comprising

extracting a center of gravity of a connected region regarding an figure region of the image as the characteristic amount.

14. The image matching method as claimed in claim 9, comprising calculating matching number between the partial region characteristic amount of the first image and the partial characteristic amount of the second image.

15. The image matching method as claimed in claim 9, wherein one geometric transformation parameter or more is utilized as the estimated geometric transformation parameter.

16. The image matching method as claimed in claim 9, wherein:

the estimated geometric transformation parameters are related to the characteristic points within the arrangement of the characteristic points of each of the images; and
the geometric transformation parameters related to the characteristic points are utilized.

17. An image matching program for performing controls to match a first image and a second image, which causes a computer to execute:

a function which calculates one partial region or more from an image of the second image;
a function which calculates a partial region characteristic amount regarding the partial region;
a function which calculates characteristic points of the images from each of the first image and the second image;
a function which calculates arrangements of the characteristic points from each of the images;
a function which calculates a characteristic amount that is a geometric transformation invariant or a characteristic vector having the geometric transformation invariant as an element from the arrangements of the characteristic points of each of the images;
a function which judges whether or not the characteristic amount or the characteristic vector calculated from the first image matches with the characteristic amount or the characteristic vector calculated from the second image;
a function which estimates a geometric transformation parameter between the first image and the second image;
a function which calculates a partial region on the first image corresponding to a partial region on the second image by utilizing the geometric transformation parameter;
a function which calculates a characteristic amount of the projection image regarding the partial region on the first image corresponding to the acquired partial region of the second image; and
a function which judges whether or not the characteristic amount of the partial region of the projection image matches with the characteristic amount of the partial region.

18. The image matching program as claimed in claim 17, wherein:

the estimated geometric transformation parameter is a constant value regardless of positions on the image; and
the estimated geometric transformation parameter that takes a constant value regardless of the positions on the image is utilized.

19. The image matching program as claimed in claim 17, which causes the computer to execute a function which calculates one partial region candidate or more in addition to the geometric transformation parameter by using one parameter value or more given in advance regarding the geometric transformation, and judges that the partial region is matched when the partial region candidate calculated by using at least one of the parameter values given in advance.

20. The image matching program as claimed in claim 17, wherein:

a second geometric transformation invariant is used as the characteristic amount in the partial region; and
the geometric transformation invariant is used as the characteristic amount in the partial region on the first image corresponding to the partial region on the second image.

21. The image matching program as claimed in claim 17, which causes the computer to execute a function which extracts a center of gravity of a connected region regarding an figure region of the image as the characteristic amount.

**22.** The image matching program as claimed in claim 17, which causes the computer to execute a function which calculates matching number between the partial region characteristic amount of the first image and the partial characteristic amount of the second image.

**23.** The image matching program as claimed in claim 17, wherein:

one geometric transformation parameter or more is used as the estimate geometric transformation parameter.

**24.** The image matching program as claimed in claim 17, wherein:

the estimated geometric transformation parameters are related to the characteristic point within the arrangement of the characteristic points of each of the images; and
the geometric transformation parameters related to the characteristic points are utilized.

# FIG.1

IMAGE Q — 201 IMAGE MATCHING DEVICE

IMAGE R

**262 PARTIAL REGION PROJECTING MODULE**

- 272 — PARTIAL REGION CALCULATING MODULE
- 274 — PARTIAL REGION CHARACTERISTIC AMOUNT CALCULATING MODULE
- 276 — PARTIAL REGION CHARACTERISTIC AMOUNT STORAGE MODULE
- 278 — PROJECTION PARTIAL REGION DETERMINING MODULE

**250 PROJECTION AFFINE PARAMETER ESTIMATING MODULE**

- 212 — REGISTERED IMAGE CHARACTERISTIC POINT EXTRACTING MODULE
- 214 — REGISTERED IMAGE CHARACTERISTIC POINT ARRANGEMENT CALCULATING MODULE
- 216 — REGISTERED IMAGE INVARIANT AMOUNT CALCULATING MODULE
- 218a — REGISTERED IMAGE CHARACTERISTIC POINT ARRANGEMENT STORAGE MODULE
- 218b — REGISTERED IMAGE INVARIANT AMOUNT STORAGE MODULE

- 222 — SEARCH IMAGE CHARACTERISTIC POINT EXTRACTING MODULE
- 224 — SEARCH IMAGE CHARACTERISTIC POINT ARRANGEMENT CALCULATING MODULE
- 226 — SEARCH IMAGE INVARIANT AMOUNT CALCULATING MODULE

- 232 — INVARIANT AMOUNT MATCHING JUDGMENT MODULE
- 234 — INDIVIDUAL AFFINE PARAMETER ESTIMATING MODULE
- 236 — INDIVIDUAL AFFINE PARAMETER VERIFYING MODULE
- 246 — PARAMETER SPACE VOTE NUMBER STORAGE MODULE

- 260 — PROJECTION AFFINE PARAMETER DETERMINING MODULE

**264 PROJECTION IMAGE MATCHING MODULE**

- 280 — PROJECTION IMAGE PARTIAL REGION CHARACTERISTIC AMOUNT CALCULATING MODULE
- 282 — PARTIAL REGION MATCHING MODULE
- 290 — IMAGE MATCHING RESULT CALCULATING MODULE

EP 2 387 003 A1

# FIG.2

REGISTERING PROCESSING OF
REGISTERED IMAGE z

```
        ┌─────────────┐
        │    START    │
        └─────────────┘
               │
               ▼
┌──────────────────────────────────────┐
│  CALCULATE AND STORE REGISTERED IMAGE │──── SR1
│    CHARACTERISTIC POINT ARRANGEMENT   │
│     CALCULATE AND STORE REGISTERED    │
│      IMAGE CHARACTERISTIC VECTOR      │
└──────────────────────────────────────┘
               │
               ▼
┌──────────────────────────────────────┐
│  CALCULATE AND STORE REGISTERED IMAGE │──── SR2
│  PARTIAL REGION CHARACTERISTIC AMOUNT │
└──────────────────────────────────────┘
               │
               ▼
        ┌─────────────┐
        │     END     │
        └─────────────┘
```

# FIG.3

```
                    ┌─────────────────────┐
                    │    SR1 : START      │
                    └─────────────────────┘
                              │
        ┌─────────────────────┼─────────────────────┐───── SR1
        │                     ▼                      │
        │  ┌────────────────────────────────────┐   │───── SR101
        │  │    EXTRACT  CHARACTERISTIC  POINT   │   │
        │  │      FROM  REGISTERED  IMAGE        │   │
        │  └────────────────────────────────────┘   │
        │                     │                      │
        │                     ▼                      │
        │  ┌────────────────────────────────────┐   │───── SR102
        │  │  CALCULATE  AND  STORE  REGISTERED  IMAGE │
        │  │  CHARACTERISTIC  POINT  ARRANGEMENT │   │
        │  └────────────────────────────────────┘   │
        │                     │                      │
        │                     ▼                      │
        │  ┌────────────────────────────────────┐   │───── SR103
        │  │  CALCULATE  AND  STORE  REGISTERED  │   │
        │  │  IMAGE  CHARACTERISTIC  VECTOR      │   │
        │  └────────────────────────────────────┘   │
        └─────────────────────┼─────────────────────┘
                              ▼
                    ┌─────────────────────┐
                    │     SR1 : END       │
                    └─────────────────────┘
```

# FIG.4

```
                    ┌─────────────────────┐
                    │   SR101 : START     │
                    └─────────────────────┘
                              │
                              ▼
    ┌──────────────────────────────────────────────┐──── SR101
    │  ┌────────────────────────────────────────┐   │
    │  │      BINARIZE  REGISTERED  IMAGE        │───┼──── SR1011
    │  └────────────────────────────────────────┘   │
    │                    │                           │
    │                    ▼                           │
    │  ┌────────────────────────────────────────┐   │
    │  │        ACQUIRE  ALL  COUPLED            │───┼──── SR1012
    │  │      REGIONS  OF  BLACK  PIXELS         │   │
    │  └────────────────────────────────────────┘   │
    │                    │                           │
    │                    ▼                           │
    │  ┌────────────────────────────────────────┐   │
    │  │   ACQUIRE  CENTERS  OF  GRAVITY         │───┼──── SR1013
    │  │ OF  BLACK  PIXEL  COUPLED  REGIONS      │   │
    │  │   TO BE  CHARACTERISTIC  POINTS         │   │
    │  └────────────────────────────────────────┘   │
    └──────────────────────────────────────────────┘
                              │
                              ▼
                    ┌─────────────────────┐
                    │    SR101 : END      │
                    └─────────────────────┘
```

# FIG.5

SR102:START

SR102

SET ONE FOCUSED
CHARACTERISTIC POINT — SR1021

SELECT m POINTS NEAR FOCUSED
CHARACTERISTIC POINT — SR1022

ARRANGE m POINTS — SR1023

ACQUIRE COORDINATE SEQUENCE
OF m-POINT CHARACTERISTIC POINTS — SR1024

STORE CHARACTERISTIC POINT
COORDINATE SEQUENCE — SR1025

SR1026

ALL CHARACTERISTIC
POINTS TREATED AS FOCUSED
CHARACTERISTIC POINTS ?

NO

YES

SR102:END

# FIG.6

SR103:START — SR103

SET ONE FOCUSED CHARACTERISTIC POINT — SR1031

CALCULATE CHARACTERISTIC VECTOR — SR1032

STORE CHARACTERISTIC VECTOR — SR1033

PROCESSING COMPLETED FOR ALL CHARACTERISTIC POINT ARRANGEMENTS ? — SR1034

NO

YES

SR103:END

# FIG.7

```
                    ┌──────────────────────┐
                    │     SR2 : START      │
                    └──────────────────────┘
                               │
         ┌─────────────────────┼──────────────────────┐──── SR2
         │                     ▼                       │
         │  ┌───────────────────────────────────────┐ │──── SR21
         │  │      CALCULATE  PARTIAL  REGION        │ │
         │  └───────────────────────────────────────┘ │
         │                     │                       │
         │                     ▼                       │
         │  ┌───────────────────────────────────────┐ │──── SR22
         │  │  CALCULATE  AND  STORE  PARTIAL        │ │
         │  │  REGION  CHARACTERISTIC  AMOUNT        │ │
         │  └───────────────────────────────────────┘ │
         └─────────────────────┼──────────────────────┘
                               ▼
                    ┌──────────────────────┐
                    │      SR2 : END       │
                    └──────────────────────┘
```

# FIG.8

SR21:START

SR21

SET FOCUSED REGISTERED IMAGE — SR211

CALCULATE PARTIAL REGION
OF REGISTERED IMAGE z — SR212

SR213

COMPLETED
FOR ALL REGISTERED
IMAGES ?

NO

YES

SR21:END

# FIG.9

SR22

```
      ┌─────────────────────┐
      │   SR22:START        │
      └─────────────────────┘
                │
                ▼
  ┌──────────────────────────────────────┐
  │  SET FOCUSED REGISTERED IMAGE         │──── SR221
  └──────────────────────────────────────┘
                │
                ▼
  ┌──────────────────────────────────────┐
  │  CALCULATE PARTIAL REGION OF          │
  │  REGISTERED IMAGE z AND PARTIAL       │──── SR222
  │  REGION CHARACTERISTIC AMOUNT         │
  └──────────────────────────────────────┘
                │
                ▼
              SR223
         ╱─────────────╲
        ╱  COMPLETED     ╲
       ╱  FOR ALL REGISTERED ╲   NO
       ╲    IMAGES ?     ╱───────
        ╲              ╱
         ╲───────────╱
            YES │
                ▼
      ┌─────────────────────┐
      │   SR22:END          │
      └─────────────────────┘
```

# FIG.10

SEARCH PROCESSING

```
                    ┌──────────────┐
                    │    START     │
                    └──────┬───────┘
                           │
        ┌──────────────────▼──────────────────┐
        │          INITIALIZATION             │─── SQ1
        └──────────────────┬──────────────────┘
                           │
        ┌──────────────────▼──────────────────┐
        │      ESTIMATE PROJECTION            │─── SQ2
        │       AFFINE PARAMETER              │
        └──────────────────┬──────────────────┘
                           │
        ┌──────────────────▼──────────────────┐
        │     PROJECT PARTIAL REGION OF       │─── SQ3
        │  REGISTERED IMAGE ON SEARCH IMAGE   │
        └──────────────────┬──────────────────┘
                           │
        ┌──────────────────▼──────────────────┐
        │  CALCULATE CHARACTERISTIC AMOUNT    │─── SQ4
        │  WITHIN PROJECTION IMAGE PARTIAL    │
        │  REGION, AND PERFORMS MATCHING      │
        │      BY EACH PARTIAL REGION         │
        └──────────────────┬──────────────────┘
                           │
                   ╱───────▼───────╲          SQ5
                  ╱   COMPLETED     ╲
                 ╱  FOR ALL REGISTERED╲──────── NO
                 ╲     IMAGES ?       ╱
                  ╲                  ╱
                   ╲───────┬───────╱
                       YES │
        ┌──────────────────▼──────────────────┐
        │       ACQUIRE FINAL IMAGE           │─── SQ6
        │        MATCHING RESULT              │
        └──────────────────┬──────────────────┘
                           │
                    ┌──────▼───────┐
                    │     END      │
                    └──────────────┘
```

42

# FIG.11

```
            ┌─────────────────┐
            │   SQ1:START     │
            └────────┬────────┘
                     │
  ┌──────────────────┼──────────────────────┐ ── SQ1
  │                  ▼                       │
  │  ┌────────────────────────────────┐     │
  │  │   SET ONE UNPROCESSED          │─────┼── SQ11
  │  │   REGISTERED IMAGE             │     │
  │  └───────────────┬────────────────┘     │
  │                  ▼                       │
  │  ┌────────────────────────────────┐     │
  │  │   PERFORM INITIALIZATION       │     │
  │  │   PROCESSING REGARDING VOTE    │─────┼── SQ12
  │  │   NUMBER STORAGE REGION        │     │
  │  └───────────────┬────────────────┘     │
  │                  │                       │
  └──────────────────┼──────────────────────┘
                     ▼
            ┌─────────────────┐
            │    SQ1:END      │
            └─────────────────┘
```

# FIG.12

SQ12

SQ12:START

DEFINE RANGES OF POSSIBLE
VALUES OF a, b, c, d,x, y, xq, yq — SQ121

DEFINE RANGES OF POSSIBLE
VALUES OF e, f — SQ122

DIVIDE RANGES OF POSSIBLE VALUES — SQ123
OF a, b, c, d, e, f, AND CREATE
COMBINATIONS OF SECTIONS

INITIALIZE ALL VOTE NUMBER STORAGE — SQ124
REGIONS(PARAMETER VALUE
STORAGE REGIONS)CORRESPONDING
TO COMBINATIONS OF SECTIONS

SQ12:END

# FIG.13

```
                    ( SQ2:START )
                                              SQ2
    ┌─────────────────────────────────────────────┐
    │  ┌──────────────────────────────────┐        │
    │  │  CALCULATE  CHARACTERISTIC  POINT │──SQ21  │
    │  │  ARRANGEMENT  AND  CHARACTERISTIC │        │
    │  │  VECTOR  FROM  SEARCH  IMAGE      │        │
    │  └──────────────────────────────────┘        │
    │                    │                          │
    │  ┌──────────────────────────────────┐        │
    │  │  CALCULATE  VOTE  NUMBER  AND     │──SQ22  │
    │  │  PARAMETER  VALUE, RESPECTIVELY,  │        │
    │  │  AND  STORE  THOSE  TO  VOTE NUMBER│       │
    │  │  STORAGE  REGION AND PARAMETER    │        │
    │  │  VALUE STORAGE REGION, RESPECTIVELY│       │
    │  └──────────────────────────────────┘        │
    │                    │                          │
    │  ┌──────────────────────────────────┐        │
    │  │  DETERMINE  PROJECTION            │──SQ23  │
    │  │  AFFINE  PARAMETER                │        │
    │  └──────────────────────────────────┘        │
    └─────────────────────────────────────────────┘
                        │
                    ( SQ2:END )
```

# FIG.14

SQ22

( SQ22:START )

SET REGISTERED IMAGE
CHARACTERISTIC VECTOR ⟶ SQ2201

SET SEARCH IMAGE
CHARACTERISTIC VECTOR ⟶ SQ2202

CALCULATE SIMILARITY OF
CHARACTERISTIC VECTOR ⟶ SQ2203

SQ2204
SIMILARITY IS
WITHIN RANGE SET
IN ADVANCE ?

NO

YES

ESTIMATE INDIVIDUAL
AFFINE PARAMETER ⟶ SQ2205

SQ2206
INDIVIDUAL
AFFINE PARAMETER
SATISFIES SET
CONDITION ?

NO

YES

INCREMENTS VOTE NUMBER
OF APPROPRIATE VOTE
NUMBER STORAGE REGION BY"1",
AND UPDATES PARAMETER
VALUE OF PARAMETER
VALUE STORAGE REGION ⟶ SQ2207

SQ2208
COMPLETED
FOR ALL SEARCH IMAGE
CHARACTERISTIC
VECTORS ?

NO

YES

SQ2209
COMPLETED FOR
ALL REGISTERED IMAGE
CHARACTERISTIC
VECTORS ?

NO

YES

( SQ22:END )

# FIG.15

SQ2207:START

SQ2207

ACQUIRE COMBINATION OF SECTIONS CORRESPONDING TO INDIVIDUAL AFFINE PARAMETER — SQ22071

INCREMENT VOTE NUMBER STORED IN VOTE NUMBER STORAGE REGION CORRESPONDING TO COMBINATIONS OF CORRESPONDING SECTIONS BY"1" — SQ22072

UPDATE PARAMETER VALUE STORED IN PARAMETER STORAGE REGIONS CORRESPONDING TO COMBINATIONS OF CORRESPONDING SECTIONS — SQ22073

SQ2207:END

# FIG.16

```
                    ┌──────────────────┐          SQ3
                    │   SQ3 : START     │        ╱
                    └──────────────────┘

              ┌──────────────────────────────────┐───── SQ31
              │  SET FOCUSED PARTIAL REGION       │
              └──────────────────────────────────┘

              ┌──────────────────────────────────┐───── SQ32
              │   CALCULATE PROJECTION            │
              │   REGION OF PARTIAL REGION        │
              └──────────────────────────────────┘

                              SQ33
                        ╱───────────╲
                      ╱   PROJECTION  ╲
            NO       ╱  REGION IS WITHIN ╲
        ◄───────────    EFFECTIVE
                      ╲   REGION ?      ╱
                        ╲─────────────╱
                              │ YES
              ┌──────────────────────────────────┐───── SQ34
              │ TEMPORARILY STORE PROJECTION      │
              │ PARTIAL REGION FOR LATTER         │
              │ STAGE OF SEARCH PROCESSING        │
              └──────────────────────────────────┘

                              SQ35
                        ╱───────────╲
                      ╱  PROCESSING   ╲
                     ╱ COMPLETED FOR ALL ╲    NO
                       PARTIAL REGIONS ?      ─────►
                      ╲                 ╱
                        ╲─────────────╱
                              │ YES
              ┌──────────────────────────────────┐───── SQ36
              │   ACQUIRE PROJECTION              │
              │   PARTIAL REGION NUMBER           │
              └──────────────────────────────────┘

                    ┌──────────────────┐
                    │   SQ3 : END       │
                    └──────────────────┘
```

# FIG.17

```
                    ┌─────────────────────┐        ╭SQ4
                    │    SQ4 : START      │       ╱
                    └─────────────────────┘
  ┌──────────────────────────────────────────────────────┐
  │         ▼                                              │
  │  ┌───────────────────────────┐      ╭SQ40            │
  │  │      INITIALIZATION        │                       │
  │  └───────────────────────────┘                       │
  │         ▼ ◄──────────────────────────────────────┐   │
  │  ┌───────────────────────────┐      ╭SQ41         │   │
  │  │    SELECT  ONE  SEARCH     │                   │   │
  │  │  IMAGE  PARTIAL  REGION    │                   │   │
  │  └───────────────────────────┘                   │   │
  │         ▼                                         │   │
  │  ┌───────────────────────────┐      ╭SQ42         │   │
  │  │  CALCULATE  SEARCH  IMAGE  │                   │   │
  │  │     PARTIAL  REGION        │                   │   │
  │  │  CHARACTERISTIC  AMOUNT    │                   │   │
  │  └───────────────────────────┘                   │   │
  │         ▼                    ╭SQ43                │   │
  │        ╱◇╲                                        │   │
  │     ╱ MATCHED  WITH ╲                             │   │
  │  ╱CORRESPONDING REGISTERED╲  NO                   │   │
  │ ◇ IMAGE CHARACTERISTIC  ◇──────┐                  │   │
  │  ╲     AMOUNT ?    ╱            │                  │   │
  │     ╲        ╱                 │                  │   │
  │        ▼ YES                   │                  │   │
  │  ┌───────────────────────────┐ │    ╭SQ44         │   │
  │  │   INCREMENT  PARTIAL       │ │                 │   │
  │  │  MATCHING  NUMBER BY"1"    │ │                 │   │
  │  └───────────────────────────┘ │                 │   │
  │         ▼ ◄────────────────────┘                 │   │
  │        ╱◇╲              ╭SQ45                     │   │
  │     ╱       ╲                                     │   │
  │  ╱ COMPLETED  FOR ╲      NO                       │   │
  │ ◇ ALL SEARCH IMAGE PARTIAL ◇─────────────────────┘   │
  │  ╲    REGIONS ? ╱                                     │
  │     ╲       ╱                                         │
  │        ▼ YES                                          │
  └──────────────────────────────────────────────────────┘
                    ▼
           ┌─────────────────────┐
           │     SQ4 : END       │
           └─────────────────────┘
```

# FIG.18

```
        ┌─────────────────┐
        │   SQ6:START     │
        └─────────────────┘                    SQ6
                 │
    ┌────────────┼────────────────────────────┐
    │            ▼                             │
    │  ┌──────────────────────────┐           │
    │  │  ACQUIRE  MATCHING DEGREE │ ─── SQ61  │
    │  │  FOR EACH REGISTERED IMAGE│           │
    │  └──────────────────────────┘           │
    │            │                             │
    │            ▼                             │
    │  ┌──────────────────────────┐           │
    │  │  DETERMINE REGISTERED     │ ─── SQ62  │
    │  │  IMAGE HAVING MAXIMUM     │           │
    │  │  MATCHING DEGREE          │           │
    │  └──────────────────────────┘           │
    │            │                             │
    │            ▼                             │
    │  ┌──────────────────────────┐           │
    │  │  OUTPUT INFORMATION THAT  │ ─── SQ63  │
    │  │  CAN UNIQUELY DESIGNATE   │           │
    │  │  REGISTERED  IMAGE        │           │
    │  └──────────────────────────┘           │
    │            │                             │
    └────────────┼────────────────────────────┘
                 ▼
        ┌─────────────────┐
        │    SQ6:END      │
        └─────────────────┘
```

# FIG.19

IMAGE R

IMAGE Q

# FIG.20

ACQUIRED IS A REGION
AS IF IT IS A CIRCUMSCRIBED
RECTANGLE OF IMAGE Q

PROJECTION OF
RECTANGULAR
INFORMATION

IMAGE R

IMAGE Q

# FIG.21

SEARCH PROCESSING

SQ4:START

INITIALIZATION —— SQ1

ESTIMATE PROJECTION
AFFINE PARAMETER —— SQ2

CALCULATE CHARACTERISTIC AMOUNT
WITHIN PROJECTION IMAGE PARTIAL
REGION WHILE PROJECTING PARTIAL
REGION OF REGISTERED IMAGE
ONTO SEARCH IMAGE , AND PERFORMS
MATCHING BY EACH PARTIAL REGION —— SQ7

COMPLETED
FOR ALL REGISTERED
IMAGES ? —— SQ5

NO

YES

ACQUIRE FINAL IMAGE
MATCHING RESULT —— SQ6

SQ4:END

# FIG.22

SQ7:START

SQ7

SQ700 — INITIALIZATION(PARTIAL MATCHING NUMBER, EFFECTIVE REGION NUMBER)

SET FOCUSED REGISTERED IMAGE PARTIAL REGION — SQ701

CALCULATE PROJECTION REGION OF PARTIAL REGION — SQ702

SQ703 — PROJECTION REGION IS WITHIN EFFECTIVE REGION ? — NO

YES

SQ704 — FIRST WITHIN FOCUSED REGISTERED IMAGE PARTIAL REGION ? — NO

YES

SQ705 — INCREMENT PROJECTION PARTIAL REGION NUMBER EXISTING WITHIN EFFECTIVE REGION BY"1"

CALCULATE SEARCH IMAGE PARTIAL REGION CHARACTERISTIC AMOUNT — SQ706

SQ707 — MATCHED WITH REGISTERED IMAGE PARTIAL REGION CHARACTERISTIC AMOUNT ? — NO

YES

SQ708 — INCREMENT PARTIAL MATCHING NUMBER BY"1"

SQ709 — ALL PARTIAL REGIONS PROJECTED ? — NO

YES

SQ710 — ALL REGISTERED IMAGES SET ? — NO

YES

SQ7:END

# FIG.23

FIG.23

201 IMAGE MATCHING DEVICE

IMAGE Q

IMAGE R

**262 PARTIAL REGION PROJECTING MODULE**

- 272 PARTIAL REGION CALCULATING MODULE
- 274 PARTIAL REGION CHARACTERISTIC AMOUNT CALCULATING MODULE
- 276 PARTIAL REGION CHARACTERISTIC AMOUNT STORAGE MODULE
- 278 PROJECTION PARTIAL REGION DETERMINING MODULE

**250 PROJECTION AFFINE PARAMETER ESTIMATING MODULE**

- 212 REGISTERED IMAGE CHARACTERISTIC POINT EXTRACTING MODULE
- 214 REGISTERED IMAGE CHARACTERISTIC POINT ARRANGEMENT CALCULATING MODULE
- 216 REGISTERED IMAGE INVARIANT AMOUNT CALCULATING MODULE
- 218a REGISTERED IMAGE CHARACTERISTIC POINT ARRANGEMENT STORAGE MODULE
- 218b REGISTERED IMAGE INVARIANT AMOUNT STORAGE MODULE

- 222 SEARCH IMAGE CHARACTERISTIC POINT EXTRACTING MODULE
- 224 SEARCH IMAGE CHARACTERISTIC POINT ARRANGEMENT CALCULATING MODULE
- 226 SEARCH IMAGE INVARIANT AMOUNT CALCULATING MODULE

- 232 INVARIANT AMOUNT MATCHING JUDGMENT MODULE
- 234 INDIVIDUAL AFFINE PARAMETER ESTIMATING MODULE
- 236 INDIVIDUAL AFFINE PARAMETER VERIFYING MODULE
- 246 PARAMETER SPACE VOTE NUMBER STORAGE MODULE

- 260 PROJECTION AFFINE PARAMETER DETERMINING MODULE

**264 PROJECTION IMAGE MATCHING MODULE**

- 280 PROJECTION IMAGE PARTIAL REGION CHARACTERISTIC AMOUNT CALCULATING MODULE
- 282 PARTIAL REGION MATCHING MODULE

- 390 IMAGE MATCHING RESULT CALCULATING MODULE

EP 2 387 003 A1

EP 2 387 003 A1

# FIG.24

SEARCH PROCESSING

```
        ( START )
            │
            ▼
   ┌─────────────────────┐
   │   INITIALIZATION     │──── SQ1
   └─────────────────────┘
            │
            ▼
   ┌─────────────────────┐
   │ ESTIMATE PROJECTION  │──── SQ2
   │  AFFINE PARAMETER    │
   └─────────────────────┘
            │
            ▼
   ┌─────────────────────────┐
   │ PROJECT PARTIAL REGION OF│──── SQ3
   │REGISTERED IMAGE ON SEARCH│
   │         IMAGE            │
   └─────────────────────────┘
            │
            ▼
   ┌─────────────────────────────┐
   │ CALCULATE CHARACTERISTIC     │──── SQ4
   │ AMOUNT WITHIN PROJECTION     │
   │ IMAGE PARTIAL REGION, AND    │
   │ PERFORMS MATCHING BY EACH    │
   │ PARTIAL REGION               │
   └─────────────────────────────┘
            │
            ▼
        ◇ COMPLETED ◇──── SQ5
       FOR ALL REGISTERED ──NO──┐
          IMAGES ?
            │YES
            ▼
   ┌─────────────────────┐
   │ ACQUIRE FINAL IMAGE  │──── SQ8
   │  MATCHING RESULT     │
   └─────────────────────┘
            │
            ▼
         ( END )
```

56

# FIG.25

```
                    ┌──────────────────┐
                    │   SQ8 : START    │                    SQ8
                    └────────┬─────────┘              ╱
   ┌─────────────────────────┼─────────────────────────────┐
   │                         ▼                               │
   │        ┌────────────────────────────────┐              │
   │        │   ACQUIRE  MATCHING  DEGREE     │  ─── SQ81    │
   │        │   FOR EACH REGISTERED IMAGE     │              │
   │        └────────────────┬───────────────┘              │
   │                         ▼                               │
   │        ┌────────────────────────────────┐              │
   │        │      ACQUIRE  REGISTERED        │  ─── SQ82    │
   │        │    IMAGE  TO  BE  OUTPUTTED     │              │
   │        └────────────────┬───────────────┘              │
   │                         ▼                               │
   │        ┌────────────────────────────────┐              │
   │        │  OUTPUT  INFORMATION  THAT      │  ─── SQ83    │
   │        │  CAN UNIQUELY DESIGNATE         │              │
   │        │      REGISTERED  IMAGE          │              │
   │        └────────────────┬───────────────┘              │
   └─────────────────────────┼─────────────────────────────┘
                             ▼
                    ┌──────────────────┐
                    │    SQ8 : END     │
                    └──────────────────┘
```

57

EP 2 387 003 A1

# FIG.26

CCCCC
BBB 1
AAA

REGISTERED IMAGE 1

PROJECTION OF
RECTANGLE
INFORMATION

CCCCC
BBB 1000
AAA

SEARCH IMAGE

CCCCC
BBB 1000
AAA

REGISTERED IMAGE 2

PROJECTION OF
RECTANGLE
INFORMATION

CCCCC
BBB 1000
AAA

SEARCH IMAGE

# FIG.27

1 IMAGE MATCHING DEVICE

CPU — 2

IMAGE MATCHING MODULE — 201

5

INPUT MODULE

3

STORAGE MEDIUM

6

OUTPUT MODULE

4

STORAGE MEDIUM

# FIG.28

SQA3:START

SQA3

SET PARTIAL REGION
TO BE FOCUSED — SQ31

SET AFFINE PARAMETER
TO BE FOCUSED — SQA315

CALCULATE PROJECTION
REGION OF PARTIAL REGION — SQ32

PROJECTION
REGION IS WITHIN
EFFECTIVE
REGION ? — SQ33

NO

YES

TEMPORARILY STORE PROJECTION
PARTIAL REGION FOR LATTER
STAGE OF SEARCH PROCESSING — SQ34

PROCESSING
COMPLETED WITH ALL AFFINE
PARAMETERS ? — SQA345

NO

YES

PROCESSING
COMPLETED FOR ALL
PARTIAL REGIONS ? — SQ35

NO

YES

ACQUIRE PROJECTION
PARTIAL REGION NUMBER — SQ36

SQA3:END

# FIG.29

SQA4:START        SQ4

SQ40 — INITIALIZATION

SQA41 — SELECT ONE REGISTERED IMAGE PARTIAL REGION

BQA415 — SELECT ONE AFFINE PARAMETER

SQA42 — CALCULATE SEARCH IMAGE PARTIAL REGION CHARACTERISTIC AMOUNT

SQA43 — MATCHED WITH CORRESPONDING REGISTERED IMAGE CHARACTERISTIC AMOUNT ?

NO

SQA435

NO

YES

YES

SQ44 — INCREMENT PARTIAL MATCHING NUMBER BY"1"

SQA45 — COMPLETED FOR ALL REGISTERED IMAGE PARTIAL REGIONS ?

NO

YES

SQA4:END

# FIG.30

# FIG.31

SQB2:START

SQ2

CALCULATE CHARACTERISTIC POINT ARRANGEMENT AND CHARACTERISTIC VECTOR FROM SEARCH IMAGE — SQ21

CALCULATE AND STORE INDIVIDUAL AFFINE PARAMETER — SQB22

SQB2:END

# FIG.32

SQB22:START

SQB22

SET REGISTERED IMAGE CHARACTERISTIC VECTOR — SQ2201

SET SEARCH IMAGE CHARACTERISTIC VECTOR — SQ2202

CALCULATE SIMILARITY OF CHARACTERISTIC VECTOR — SQ2203

SIMILARITY WITHIN SET RANGE ? — SQ2204

NO

YES

ESTIMATE INDIVIDUAL AFFINE PARAMETER — SQ2205

INDIVIDUAL AFFINE PARAMETER SATISFIES SET CONDITION ? — SQ2206

NO

YES

STORE INDIVIDUAL AFFINE PARAMETER — SQ2207

COMPLETED FOR ALL SEARCH IMAGE CHARACTERISTIC VECTORS ? — SQ2208

NO

YES

COMPLETED FOR ALL REGISTERED IMAGE CHARACTERISTIC VECTORS ? — SQ2209

NO

YES

SQB22:END

# FIG.33

SQB3

SQB3:START

SET PARTIAL REGION TO BE FOCUSED — SQ31

SET AFFINE PARAMETER TO BE FOCUSED — SQB315

CALCULATE PROJECTION REGION OF PARTIAL REGION — SQ32

SQ33

PROJECTION REGION IS WITHIN EFFECTIVE REGION ?

NO

YES

TEMPORARILY STORE PROJECTION PARTIAL REGION FOR LATTER STAGE OF SEARCH PROCESSING — SQ34

SQA345

PROCESSING COMPLETED WITH ALL AFFINE PARAMETERS ?

NO

YES

SQ35

PROCESSING COMPLETED FOR ALL PARTIAL REGIONS ?

NO

YES

ACQUIRE PROJECTION PARTIAL REGION NUMBER — SQ36

SQB3:END

# FIG.34

SQB315

SQ31

SQB3151

INDIVIDUAL AFFINE PARAMETER ACQUIRED ?

NO

YES

SQB3152

AFFINE PARAMETER REGARDING FOCUSED CHARACTERISTIC POINT ACQUIRED ?

SQ35

SQB3154

SELECT ONE AFFINE PARAMETER REGARDING NEARBY CHARACTERISTIC POINT

SQB3153

SELECT ONE AFFINE PARAMETER REGARDING FOCUSED CHARACTERISTIC POINT

SQ32

# FIG.35

SQB4:START

SQ4

SQ40 — INITIALIZATION

SQA41 — SELECT ONE REGISTERED IMAGE PARTIAL REGION

SQB415 — SELECT ONE PROJECTION REGION

SQB42 — CALCULATE SEARCH IMAGE PARTIAL REGION CHARACTERISTIC AMOUNT

SQA43 — MATCHED WITH CORRESPONDING REGISTERED IMAGE CHARACTERISTIC AMOUNT ?

NO

YES

SQA435

NO

YES

SQ44 — INCREMENT PARTIAL MATCHING NUMBER BY "1"

SQA45 — COMPLETED FOR ALL REGISTERED IMAGE PARTIAL REGIONS ?

NO

YES

SQB4:END

# FIG.36

```
                                                    SQB315
        ┌──────────────┐
        │   SQA:41     │
        └──────────────┘
                │
   ┌────────────┼──────────────────────────────────┐
   │            ▼                    SQB3151         │
   │         ◇◇◇◇◇◇◇◇◇◇◇◇                            │
   │ NO    ◇   PROJECTION   ◇                         │
   │◄──────◇ REGION ACQUIRED ? ◇                     │
   │       ◇◇◇◇◇◇◇◇◇◇◇◇                              │
   │            │ YES                                │
   │            ▼                                    │
   │   ┌──────────────────────┐                      │
   ▼   │     SELECT ONE        │────SQB3152          │
 ◇◇◇◇◇ │  PROJECTION REGION    │                      │
◇ SQ45 ◇└──────────────────────┘                      │
 ◇◇◇◇◇          │                                    │
   └────────────┼──────────────────────────────────┘
                ▼
        ┌──────────────┐
        │   SQB:42     │
        └──────────────┘
```

<div align="center">

**INTERNATIONAL SEARCH REPORT**

</div>

| | International application No. |
|---|---|
| | PCT/JP2009/068877 |

**A. CLASSIFICATION OF SUBJECT MATTER**
*G06T7/60(2006.01)i*

According to International Patent Classification (IPC) or to both national classification and IPC

**B. FIELDS SEARCHED**

Minimum documentation searched (classification system followed by classification symbols)
G06T7/60

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | Tomohiro NAKAI et al., "Tokuchoten no Kyokushoteki Haichi ni Motozuku Real Time Bunsho Gazo Kensaku to sono Kakucho Genjitsu eno Oyo", IPSJ SIG Notes CVIM, 09 September 2006 (09.09. 2006), vol.2006, no.93, pages 41 to 48 | 1-24 |
| A | WO 2006/092957 A1 (Osaka Prefecture University), 08 September 2006 (08.09.2006), entire text; all drawings & US 2008/0177764 A1 & EP 1914680 A1 & CN 101133429 A | 1-24 |
| A | JP 2005-49212 A (Fuji Xerox Co., Ltd.), 24 February 2005 (24.02.2005), paragraphs [0122] to [0126]; fig. 17 (Family: none) | 1-24 |

☐ Further documents are listed in the continuation of Box C.    ☐ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 03 December, 2009 (03.12.09) | 15 December, 2009 (15.12.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**EP 2 387 003 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006092957 A
- WO 2008066152 A
- JP 2001092963 A
- JP 2008288260 A
- JP 2009103116 A